# EUROPEAN PATENT APPLICATION

(11) **EP 2 934 018 A2**
(43) Date of publication of application: **21.10.2015**
(21) Application number: 15163767.5
(22) Date of filing: 15.04.2015
(51) Int. Cl.: H04N 21/432, H04N 21/435, H04N 21/426

(54) **REPRODUCTION DEVICE, MANAGEMENT SERVER, AND CONTENT MANAGEMENT METHOD**

(30) Priority: 17.04.2014 JP 2014085606
(71) Applicant: Funai Electric Co., Ltd., Daito city Osaka 574-0013 (JP)
(72) Inventor: Fujita, Koji, Osaka, 574-0013 (JP)
(74) Representative: Osha Liang

(57) **Abstract**

A reproduction device (1) comprises a controller (11) configured to read from a recording medium (4) a content (41) and medium identification information (42) identifying the recording medium (4), and to create data that associates the medium identification information (42) with device identification information (43) identifying the reproduction device (1). The reproduction device (1) also comprises a communication portion (12) configured to send the data to an external apparatus (2).

## Description

### [Technical Field]

The present invention relates to a reproduction device, a management server, a content management system, a content management method and a control method of the content management system.

### [Background Art]

Conventional content management systems include a device-side control unit that reads a content from a storage medium and performs a ripping process that stores the read content in a storage unit. Control methods of such content management systems are also known (for example, see Patent Literature 1).

Patent Literature 1 discloses a copy management system provided with a terminal device of a user having a copying function that copies a content stored in a storage medium to a secondary storage medium. This copy management system is configured to send medium identification information uniquely assigned to the storage medium and device identification information uniquely assigned to the terminal device of the user from the terminal device of the user to a management server device when the terminal device of the user copies the content to the secondary storage medium. Moreover, the management server device is configured to receive the medium identification information and the device identification information and send a decryption key of the content to the terminal device of the user. By this, it becomes possible to copy the content stored in the storage medium to the secondary storage medium by the terminal device of the user, who is the owner of the storage medium, alone. That is, a configuration is such that it is possible to suppress the content stored in the storage medium from being copied to the secondary storage medium by a terminal device of a user other than the user who owns the storage medium.

### [Citation List]

### [Patent Literature]

[Patent Literature 1] JPA 2002-328846

In relation to the above, new standards of Blu-ray Discs (BD) are being developed by the BDA (Blu-ray Disc [registered trademark] Association) and the like. It is planned that a copyright management method (for example, BD Bridge) that provides a limit count for a number of times a content stored in a storage medium is stored (ripping processed) in a secondary storage medium, such as a storage unit or external storage unit, and allows ripping processing even when the storage medium is transferred to another user will be included in these new standards of BDs.

However, when the copy management system of Patent Literature 1 is applied to the standard such as the above BD Bridge, the other user to whom the storage medium is transferred cannot perform the ripping process with the terminal device (content playback device) of the other user.

### [Summary of the Invention]

One or more embodiments of the present invention provide a content management system that can perform a ripping process by a content playback device and a control method of the content management system. For example, the content playback device may be owned by a user to whom a storage medium is transferred.

A content management system according to one or more embodiments of this invention may comprise: a content playback device comprising a device-side control unit configured to read a content from a storage medium and to perform a ripping process that stores the read content in a device-side storage unit or an external storage unit; and a management server comprising a server-side storage unit, which is configured to store a ripping limit count of the ripping process performed on individual storage mediums together with a combination of medium identification information unique to the individual storage mediums and device identification information unique to the content playback device configured to perform the ripping process, and a server-side control unit. According to one or more embodiments, the device-side control unit is configured to read the medium identification information from the storage medium during the ripping process or when commencing playback for the first time and perform an information sending control that combines and sends to the management server the medium identification information and the device identification information.

According to one or more embodiments, the server-side control unit is configured to perform a reset capability determination control that resets the ripping limit count of the storage medium when the combination of the medium identification information and the device identification information acquired from the content playback device does not match the combination of the medium identification information and the device identification information stored in the server-side storage unit or when a number of device identification information combined with the medium identification information stored in the server-side storage unit has reached a predetermined plural allowed number.

According to one or more embodiments of this invention, the server-side control unit is configured to perform the reset capability determination control that resets the ripping limit count of the storage medium when the combination of the medium identification information and the device identification information acquired from the content playback device does not match the combination of the medium identification information and the device identification information stored in the server-side storage unit. Alternatively, the server-side control unit is configured to perform the reset capability determination control that resets the ripping limit count of the storage medium in the situation where, when the medium identification information and the device identification information are acquired from the content playback device, the number of device identification information combined with the medium identification information stored in the server-side storage unit has reached the predetermined plural allowed number. By this, even when the storage medium is transferred from a user who owns the content playback device to another user who owns another content playback device, the other user can cause the content playback device to perform the ripping process. As a result, the ripping process can be performed by the content playback device owned by the user to whom the storage medium is transferred.

According to one or more embodiments, the server-side control unit is configured to delete the combination of the medium identification information and the device identification information stored in the server-side storage unit, set the combination of the medium identification information and the device identification information acquired from the content playback device, and perform the reset capability determination control that resets the ripping limit count of the storage medium when the combination of the medium identification information and the device identification information acquired from the content playback device does not match the combination of the medium identification information and the device identification information stored in the server-side storage unit or when the number of device identification information combined with the medium identification information stored in the server-side storage unit has reached the predetermined plural allowed number. By configuring the content management system in this manner, when the user who owns the storage medium changes, a new user can perform the ripping process a number of times corresponding to an initial limit count.

According to one or more embodiments, the device-side control unit is configured to combine and send to the management server the medium identification information and the device identification information each time playback of the content is performed after performing the ripping process and the reset capability determination control, and the server-side control unit is configured to perform a control that sends a playback prohibition notification signal indicating prohibition of commencement of playback of the content to the content playback device when the acquired combination of the medium identification information and the device identification information does not match the combination of the medium identification information and the device identification information stored in the server-side storage unit each time playback of the content is performed or when the acquired combination of the medium identification information and the device identification information is not included in the combination of the medium identification information and the device identification information stored in the server-side storage unit. By configuring the content management system in this manner, playback of the content by a content playback device other than the content playback device corresponding to the combination of the medium identification information and the device identification information stored in the server-side storage unit can be suppressed. As a result, a state where content playback devices of a number at or greater than the allowed number can perform playback of the content can be suppressed from occurring.

In this situation, the device-side control unit is configured to perform a control that deletes the content stored in the device-side storage unit when the playback prohibition notification signal is acquired from the management server. By configuring the content management system in this manner, playback of the content by a content playback device other than the content playback device corresponding to the combination of the medium identification information and the device identification information stored in the server-side storage unit can be reliably suppressed.

According to one or more embodiments of a content management system comprising the management server that performs the control of sending to the content playback device the playback prohibition notification signal, the content playback device further comprises an output unit that can output a list of the contents stored in the device-side storage unit, and the device-side control unit is configured to perform a control that causes the output unit to output the list of the contents when the content for which commencement of playback is prohibited is deleted when the playback prohibition notification signal is acquired. By configuring the content management system in this manner, a content for which playback is possible can be easily viewed by the user.

According to one or more embodiments, the device-side control unit is configured to perform the information sending control that combines and sends to the management server the medium identification information and the device identification information when commencing playback of the content for the first time after performing the ripping process without performing the information sending control during the ripping process, and the server-side control unit is configured to acquire the medium identification information and the device identification information and perform the reset capability determination control. By configuring the content management system in this manner, the information sending control is not performed during the ripping process; therefore, a time required for the ripping process can be shortened by an amount corresponding to the information sending control not being performed.

According to one or more embodiments, the device-side control unit is configured to perform a control that sends to the management server a deletion request signal for deleting the combination of the medium identification information and the device identification information stored in the server-side storage unit based on an operation of a user, and the server-side control unit is configured to perform a control of deleting the combination of the medium identification information and the device identification information according to the acquired deletion request signal. By configuring the content management system in this manner, the combination of the medium identification information and the device identification information stored in the server-side storage unit can be deleted as needed by the user.

According to one or more embodiments, the device-side control unit is configured to perform a control that sends to the management server a comparison result request signal for requesting a comparison result between the combination of the medium identification information and the device identification information sent to the server and the combination of the medium identification information and the device identification information stored in the server-side storage unit in addition to the medium identification information and the device identification information when performing the information sending control, and the server-side control unit is configured to perform a control that acquires the comparison result request signal and sends the comparison result to the content playback device. By configuring the content management system in this manner, it can be easily confirmed on a content-playback-device side whether the combination of the medium identification information and the device identification information owned by the user is stored in the server-side storage unit. The comparison result may be an example of "association information."

According to one or more embodiments, the server-side control unit is configured to be set so a plurality of device identification information is combined with one medium identification information and is configured to perform the reset capability determination control that resets the ripping limit count of the storage medium when the number of device identification information combined with the medium identification information stored in the server-side storage unit exceeds the predetermined plural allowed number. By configuring the content management system in this manner, even when the user owns a plurality of content playback devices, the ripping process can be performed in the plurality of content playback devices at or below the allowed number, and playback of the content is possible in any of the plurality of content playback devices at or below the allowed number. Moreover, even when the storage medium is transferred to another user and the number of device identification information combined with the medium identification information stored in the server-side storage unit exceeds the predetermined plural allowed number, the other user can perform the ripping process and playback of the content.

A control method of a content management system according to one or more embodiments of this invention may comprise: by a content playback device, reading a content from a storage medium and performing a ripping process that stores the read content in a device-side storage unit or an external storage unit; reading medium identification information unique to individual storage mediums from the storage medium and sending a combination of the medium identification information and device identification information unique to the content playback device from the content playback device to a management server including a server-side storage unit during the ripping process or when commencing playback for the first time; and resetting a ripping limit count of the storage medium by a server-side control unit of the management server when the combination of the medium identification information and the device identification information acquired from the content playback device does not match a combination of the medium identification information and the device identification information stored in the server-side storage unit or when a number of device identification information combined with the medium identification information stored in the server-side storage unit has reached a predetermined plural allowed number.

According to one or more embodiments of this invention, the method comprises the step that resets the ripping limit count of the storage medium by the server-side control unit of the management server when the combination of the medium identification information and the device identification information acquired from the content playback device does not match the combination of the medium identification information and the device identification information stored in the server-side storage unit. Moreover, when the number of device identification information combined with the medium identification information stored in the server-side storage unit has reached the predetermined plural allowed number, the method may comprise the step of resetting the ripping limit count of the storage medium by the server-side control unit of the management server. According to one or more embodiments, the user to whom is transferred the storage medium that has reached the limit count of the ripping process can perform the ripping process by the content playback device.

A reproduction device according to one or more embodiments may comprise a controller configured to read from a recording medium a content and medium identification information identifying the recording medium, and create data on a storage portion, that associates the medium identification information with device identification information identifying the reproduction device; and a communication portion configured to send the data stored on the storage portion to an external apparatus (e.g., an external network).

According to one or more embodiments, the controller is configured to requests request the external apparatus to send association information representing an association between the medium identification information and the device identification information.

Further embodiments of the reproduction device are defined in the dependent claims.

A management server according to one or more embodiments may comprise a communication portion configured to communicate with an external apparatus; and a controller configured to create data, for example on a storage portion, that associates medium identification information identifying a recording medium, device identification information identifying the external apparatus, and a reading limit count of a content from the recording medium, and to change the reading limit count based on medium identification information and specific device identification information received from the external apparatus.

According to one or more embodiments, the communication portion sends is configured to send to the external apparatus association information representing an association between the medium identification information and the device identification information in the data according to a request from the external apparatus.

Further embodiments of the management server are defined in the dependent claims.

A management method for managing a content according to one or more embodiments may comprise reading from a recording medium the content and medium identification information identifying the recording medium; creating first data on a first storage portion of a first device, that associates the medium identification information with device identification information identifying the first device; sending the first data from the first device to a second device; creating second data on a second storage portion of the second device, that associates the medium identification information, the device identification information, and a reading limit count of the content from the recording medium; and changing the reading limit count of based on the first data sent by the first device.

According to one or more embodiments, the management method further comprises sending the first data to the second device each time the first device reads the content from the recording medium or each time the first device reproduces the content.

According to one or more embodiments, the management method further comprises sending to the first device a reproduction prohibition notification signal indicating prohibition of reproducing the content from the second device; and deleting the content stored in the storage portion of the first device when the first device receives the reproduction prohibition notification signal.

According to one or more embodiments, the management method further comprises outputting a list of contents stored in the storage portion of the first device; and when the first device receives from the second device a reproduction prohibition notification signal indicating prohibition of reproducing one of the contents, excluding the one of the contents from the list.

According to one or more embodiments of the present invention, as above, the ripping process can be performed by the reproduction device owned by the user to whom is transferred the storage medium that has reached the limit count of the ripping process.

### [Brief Description of Drawings]

FIG. 1 is a block diagram illustrating an overall configuration of a content management system according to one or more embodiments of the present invention.
FIG. 2 is a diagram for describing a list of contents according to one or more embodiments of the present invention.
FIG. 3 is a diagram for describing the list of contents in a state where reproducing a content is prohibited is deleted according to one or more embodiments of the present invention.
FIG. 4 is a flowchart for describing a ripping process and a ripping limiting process according to one or more embodiments of the present invention.
FIG. 5 is a flowchart for describing a reproduction limiting process of the content according to one or more embodiments of the present invention.
FIG. 6 is a flowchart for describing a control process of reset capability determination according to one or more embodiments of the present invention.
FIG. 7 is a flowchart for describing a control process of reproduction capability determination according to one or more embodiments of the present invention.
FIG. 8 is a flowchart for describing the ripping process and the reproduction limiting process of the content according to one or more embodiments of the present invention.
FIG. 9 is a flowchart for describing the control process of reset capability determination according to one or more embodiments of the present invention.
FIG. 10 is a flowchart for describing management of a ripping process count and a pairing deletion process according to one or more embodiments of the present invention.
FIG. 11 is a flowchart for describing the reproduction limiting process of the content according to one or more embodiments of the present invention.
FIG. 12 is a flowchart for describing the control process of reproduction capability determination according to one or more embodiments of the present invention.
FIG. 13 is a diagram for describing a display asking whether to execute the ripping process according to one or more embodiments of the present invention.
FIG. 14 is a flowchart for describing a comparison control process of pairing according to one or more embodiments of the present invention.
FIG. 15 is a flowchart for describing the control process of reset capability determination according to one or more embodiments of the present invention.
FIG. 16 is a diagram for describing a display for selecting a pairing according to one or more embodiments of the present invention.
FIG. 17 is a flowchart for describing a selection control process of pairing according to one or more embodiments of the present invention.
FIG. 18 is a flowchart for describing the reproduction limiting process of the content according to one or more embodiments of the present invention.

### [Detailed Description of Embodiments of the Invention]

Embodiments of the present invention will be described below based on the drawings. One or more embodiments of the present invention relates to a content management system and a control method of the content management system and more particularly relates to a content management system comprising a device-side control unit configured to read a content from a storage medium and to perform a ripping process that stores the read content in a storage unit and a control method of the content management system.

Each embodiment that will be described below illustrates an example of the present invention and is provided for mere illustrative purposes. However, these embodiments can be combined with each other and are not intended to be limited to the specific combinations of features disclosed herein.

### (First Example)

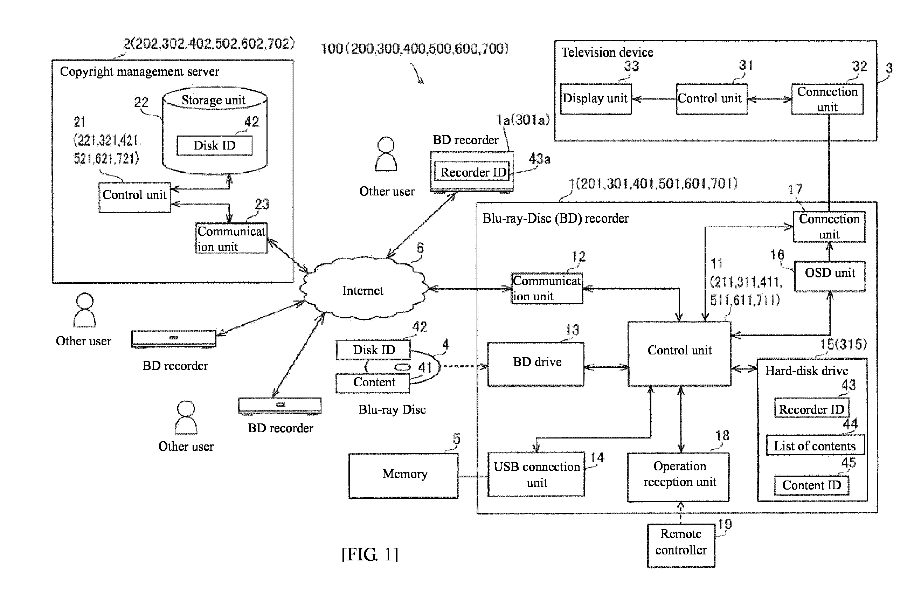

A configuration of a content management system 100 according to one or more embodiments of the present invention will be described with reference to FIGS. 1 to 3.

As illustrated in FIG. 1, the content management system 100 according to one or more embodiments of the first example of the present invention may comprise a first device, for example a Blu-ray Disc (BD) recorder 1. The BD recorder 1 is configured so that a Blu-ray Disc 4 can be inserted inside. Moreover, the BD recorder 1 is configured to be connectable to an external memory 5 (or "storage portion"). The BD recorder 1 is an example of the "reproduction device" in one or more embodiments of the present invention. Moreover, the Blu-ray Disc 4 is an example of the "storage medium" or "recording medium" in one or more embodiments of the present invention. Moreover, the memory 5 is an example of the "external storage unit" in one or more embodiments of the present invention.

Furthermore, the content management system 100 may comprise a BD recorder 1a. The BD recorder 1a may have a configuration similar to that of the BD recorder 1. A recorder ID 43a described below is stored in the BD recorder 1a.

Furthermore, the content management system 100 may comprise a copyright management server 2 (or a second device or an external apparatus with respect to the BD recorder 1) . The copyright management server 2 is configured to communicate with the BD recorder 1 (an external apparatus with respect to the copy management server 2) and the BD recorder 1 a via the Internet 6. Moreover, the copyright management server 2 is an example of the "management server" in one or more embodiments of the present invention.

Furthermore, the content management system 100 may comprise a television device 3. The television device 3 is connected to the BD recorder 1 via a cable.

Furthermore, a content 41, for example comprising video, audio, and the like, and a unique disk ID (identity) 42 are stored in advance in the Blu-ray Disc 4. Moreover, separate disk IDs 42 are individually provided even for Blu-ray Discs 4 including the same content 41. For example, the disk ID 42 is provided in a burst cutting area of the Blu-ray Disc 4. The disk ID 42 is an example of the "medium identification information" in one or more embodiments of the present invention.

Furthermore, the memory 5 may comprise a nonvolatile memory and is configured to be connectable to a USB (Universal Serial Bus) connection unit 14 of the BD recorder 1. Moreover, the memory 5 is configured to send and receive data (for example, the content 41) to and from the BD recorder 1 via the USB connection unit 14. Moreover, the memory 5 is configured to store the received data inside.

Furthermore, as illustrated in FIG. 1, the BD recorder 1 may comprise a control unit (or "controller") 11. The control unit 11 includes a CPU (Central Processing Unit). Moreover, the control unit 11 is configured to control the BD recorder 1 overall by transmitting a control signal to each portion of the BD recorder 1. Moreover, the control unit 11 is configured to read the content 41 by a BD drive 13, that will be described below, from the Blu-ray Disc 4 and perform a ripping process that stores the read content 41 in a hard-disk drive 15 or the memory 5. In one or more embodiments, the control unit creates data that associates identification information of a reproduction device with identification information of a recording medium. For example, the control unit 11 creates data on the hard-disk drive 15 that associate medium identification information that identifies the Blu-ray Disc 4 with device identification information that identifies the BD recorder 1. The control unit 11 is an example of the "device-side control unit" in one or more embodiments of the present invention.

Furthermore, the BD recorder 1 may comprise a communication unit (or "communication portion") 12. The communication unit 12 is configured to communicate with the Internet 6 and is configured to be connectable to the copyright management server 2 via the Internet 6.

Furthermore, the BD recorder 1 comprises the BD drive 13. The BD drive 13 is configured to take in the Blu-ray Disc 4 inside the BD recorder 1. Moreover, the BD drive 13 includes a blue-violet semiconductor laser (not illustrated) or the like and is configured to read the content 41 and the disk ID 42 stored in the Blu-ray Disc 4 based on an instruction from the control unit 11.

Furthermore, the BD recorder 1 may comprise the USB connection unit 14. The USB connection unit 14 includes a terminal based on USB standards and is configured to be connectable to the memory 5. Moreover, the BD recorder 1 is configured to send and receive data such as the content 41 via the USB connection unit 14.

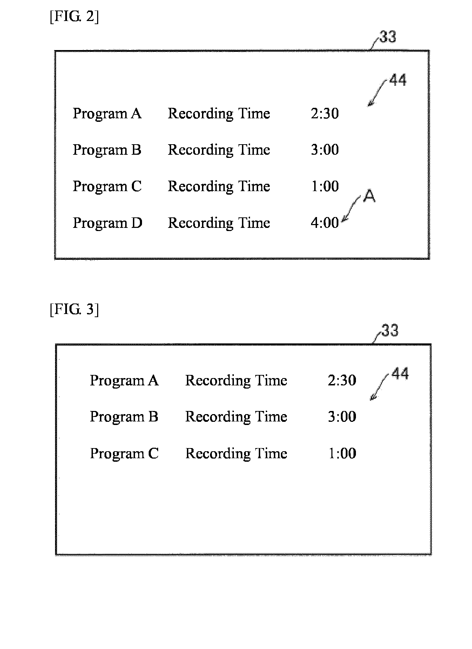

Furthermore, the BD recorder 1 may comprise the hard-disk drive 15. In one or more embodiments of the first example, a unique recorder ID 43 and a list 44 of contents (see FIG. 2) are stored in advance in the hard-disk drive 15. Moreover, the hard-disk drive 15 is configured to store the content 41 read from the Blu-ray Disc 4 by the BD drive 13 inside the hard-disk drive 15 based on an instruction of the control unit 11. The hard-disk drive 15 is an example of the "device-side storage unit" in one or more embodiments of the present invention. Moreover, the recorder ID 43 is an example of the "device identification information" in one or more embodiments of the present invention.

Furthermore, the hard-disk drive 15 is configured to store the disk ID 42 read from the Blu-ray Disc 4 inside the hard-disk drive 15 as a content ID 45 based on an instruction of the control unit 11. The disk ID 42 and the content ID 45 are configured by the same information. Moreover, the control unit 11 is configured to perform a control of adding to a content of the list 44 of the contents and storing (renewing) in the hard-disk drive 15 a content of the content 41. Moreover, the hard-disk drive 15 is configured to read the stored content 41 based on an instruction from the control unit 11.

In one or more embodiments of the first example, the BD recorder 1 may comprise an OSD (On-Screen Display) unit 16. As illustrated in FIG. 2, the OSD unit 16 is configured to output the list 44 of the contents stored in the hard-disk drive 15 based on an instruction from the control unit 11. Moreover, the OSD unit 16 is configured to transmit the list 44 of the contents to the television device 3 via a connection unit 17. The OSD unit 16 is an example of the "output unit" in one or more embodiments of the present invention.

Furthermore, as illustrated in FIG. 3, the control unit 11 is configured to perform a control that causes the OSD unit 16 to output the list 44 of the contents (see FIG. 3) in a state where a content for which commencement of reproduction is prohibited is deleted when a reproduction prohibition notification signal described below is acquired from the copyright management server 2. For example, "program A" to "program D" are included in the list 44 of the contents, and when "program D" (reference sign A in FIG. 2) corresponds to the content 41, as illustrated in FIG. 3, a configuration is such that information of "program D" is not displayed.

Furthermore, the BD recorder 1 may comprise the connection unit 17. The connection unit 17 is configured to be connectable to the television device 3 via a cable. Moreover, the connection unit 17 is configured to transmit video and audio signals of the content 41, an image output from the OSD unit 16, and the like from the BD recorder 1 to the television device 3.

Furthermore, the BD recorder 1 may comprise an operation reception unit 18. The operation reception unit 18 includes a light-receiving element or the like. Moreover, the light-receiving element is configured to receive an infrared light emitted from a remote controller 19 that will be described below and acquire operation information of a user. Moreover, the operation reception unit 18 is configured to transmit the acquired operation information of the user to the control unit 11.

Furthermore, the remote controller 19 is provided for the BD recorder 1. The remote controller 19 is configured to accept an operation of the user. The remote controller 19 includes a light-emitting element or the like and is configured to send the accepted operation information of the user from the light-emitting element to the operation reception unit 18 using the infrared light.

Furthermore, as illustrated in FIG. 1, the copyright management server 2 may comprise a control unit 21. The control unit 21 includes a CPU or the like and is configured to control the copyright management server 2 overall by transmitting a control signal to each portion of the copyright management server 2. In addition, the control unit 21 is configured to create data on a storage unit 22, that associates the medium identification information with the device identification information, and a reading limit count of a content from the recording medium. The control unit 21 is an example of the "server-side control unit" in one or more embodiments of the present invention.

Furthermore, the copyright management server 2 may comprise the storage unit 22. Disk IDs (including the disk ID 42) of Blu-ray Discs (including the Blu-ray Disc 4) sold commercially are stored in advance in the storage unit 22. Moreover, the storage unit 22, when a recorder ID is combined (paired) with the disk IDs, houses the recorder ID. For example, the storage unit 22, when the recorder ID 43 of the Blu-ray Disc 4 is paired with the disk ID 42, is configured to combine (pair) and store the disk ID 42 and the recorder ID 43. Moreover, a ripping limit count corresponding to each disk ID (Blu-ray Disc 4) is stored in the storage unit 22. For example, an initial count of the ripping limit count is set as ten times, and the control unit 21 of the copyright management server 2 is configured to perform a control that reduces a ripping process count by one every time the ripping process is performed by the BD recorder 1. Moreover, the storage unit 22 is an example of the "server-side storage unit" in one or more embodiments of the present invention.

Furthermore, the copyright management server 2 may comprise a communication unit 23. The communication unit 23 is configured to communicate with the Internet 6. Moreover, the communication unit 23 is configured to send and receive data to and from the BD recorder 1, the BD recorder 1 a, and the like via the Internet 6.

Furthermore, as illustrated in FIG. 1, the television device 3 may comprise a control unit 31. The control unit 31 includes a CPU or the like and is configured to control the television device 3 overall by transmitting a control signal to each portion of the television device 3.

Furthermore, the television device 3 may comprise a connection unit 32. The connection unit 32 is configured to be connectable to the BD recorder 1 via a cable. Moreover, the connection unit 32 is configured to send and receive video, audio, and image data (the content 41, the list 44 of the contents, and the like).

Furthermore, the television device 3 may comprise a display unit 33. As above, the display unit 33 is configured to display the received content 41 and the list 44 of the contents (see FIGS. 2 and 3) via the connection unit 32 based on an instruction from the control unit 31.

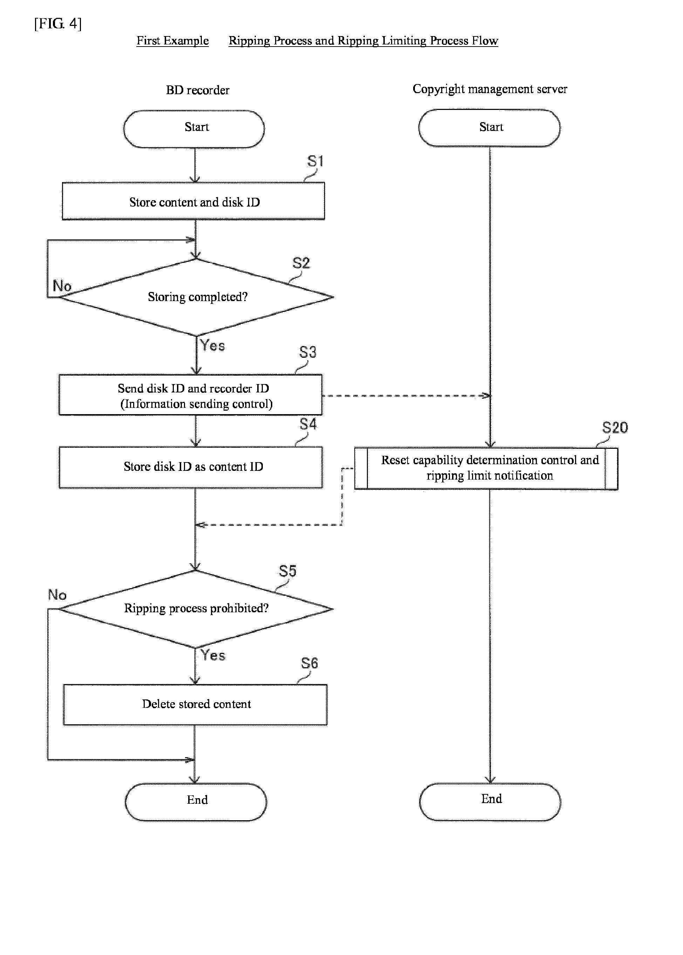

Next, the ripping process and a ripping limiting process flow of the content management system 100 according to one or more embodiments of the first example will be described with reference to FIG. 4. Processing in the BD recorder 1 is performed by the control unit 11. Moreover, processing in the copyright management server 2 is performed by the control unit 21.

First, in one or more embodiments of the first example, when during the ripping process, the disk ID 42 is read from the Blu-ray Disc 4, and an information sending control is performed that combines and sends to the copyright management server 2 the disk ID 42 and the recorder ID 43.

As illustrated in FIG. 4, in the BD recorder 1, at step S1, the content 41 and the disk ID 42 are read from the Blu-ray Disc 4. Moreover, the content 41 is stored in the hard-drive disk 15 or the memory 5. Afterward, the process proceeds to step S2.

Then, at step S2, it is determined whether storing is completed. That is, it is determined whether the process of step S1 is finished. This determination is repeated until storing is completed, and when storing is completed, the process proceeds to step S3.

Then, at step S3, the disk ID 42 and the recorder ID 43 are sent to the copyright management server 2. Afterward, the process proceeds to step S4. Then, at step S4, the disk ID 42 is stored as the content ID 45. Afterward, the process proceeds to step S5.

Then, at step S5, it is determined whether the ripping process is prohibited. That is, at step S20 that will be described below, it is determined whether a signal prohibiting the ripping process is acquired from the copyright management server 2. When the signal prohibiting the ripping process is acquired, the process proceeds to step S6, and when the signal prohibiting the ripping process is not acquired, the ripping process and the ripping limiting process in the BD recorder 1 end.

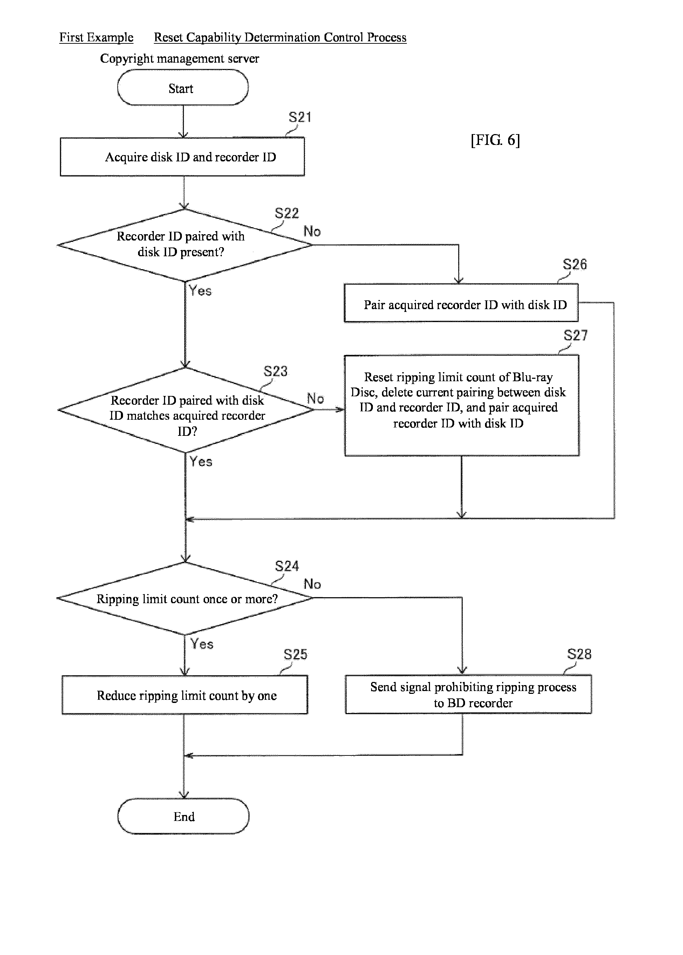

Meanwhile, in the copyright management server 2, at step S20, a reset capability determination control process (see FIG. 6) is performed. Afterward, the ripping process and the ripping limiting process flow in the copyright management server 2 end.

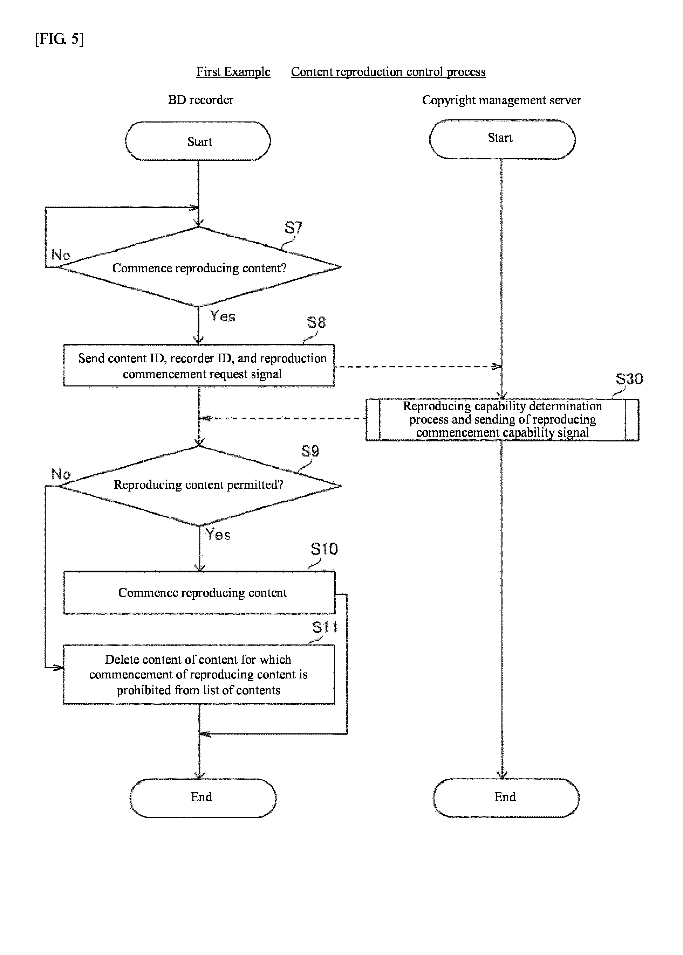

Next, a content reproduction control process flow of the content management system 100 according to one or more embodiments of the first example will be described with reference to FIG. 5. Processing in the BD recorder 1 is performed by the control unit 11. Moreover, processing in the copyright management server 2 is performed by the control unit 21. Here, in one or more embodiments of the first example, the content reproduction control process flow (see FIG. 5) of the content management system 100 is executed after the ripping process and the ripping limiting process flow (see FIG. 4).

First, as illustrated in FIG. 5, at step S7, based on an operation of the user, it is determined whether an operation for commencing reproduction of the content 41 is executed. This determination is repeated until the operation for commencing reproduction of the content 41 is executed, and when the operation for commencing reproduction of the content 41 is executed, the process proceeds to step S8.

Here, in one or more embodiments of the first example, each time the content 41 is reproduced, the content ID 45 (same content as disk ID 42) and the recorder ID 43 are combined and sent from the BD recorder to the copyright management server 2. At step S8, the content ID 45, the recorder ID 43, and a reproduction commencement request signal for requesting the copyright management server 2 to perform capability determination of commencement of reproduction the content 41 are sent from the BD recorder 1 to the copyright management server 2. Afterward, the process proceeds to step S9.

Then, at step S9, acquisition of a reproduction commencement capability signal that will be described below from the copyright management server 2 is performed, and based on the reproduction commencement capability signal, it is determined whether reproducing the content 41 is permitted. When the reproduction commencement capability signal permitting reproduction of the content 41 is acquired, the process proceeds to step S10, and when the reproduction commencement capability signal (reproduction prohibition notification signal) prohibiting reproduction of the content 41 is acquired, the process proceeds to step S11. The reproduction commencement capability signal that prohibits reproduction of the content 41 is an example of the "reproduction prohibition notification signal" in one or more embodiments of the present invention.

Then, at step S10, reproduction of the content 41 commences. The content 41 is read from the hard-disk drive 15, and the content 41 is transmitted to the television device 3 via the connection unit 18. Then, the video and audio of the transmitted content 41 are displayed on the display unit 33 by the television device 3. Afterward, the content reproduction control process flow in the BD recorder 1 ends.

Furthermore, in one or more embodiments of the first example, when the reproduction commencement capability signal prohibiting reproduction of the content 41, which will be described below, is acquired from the copyright management server 2, output from the OSD unit 16 is performed of the list 44 of the contents (see FIG. 3) when the content for which commencement of reproduction is prohibited is deleted.

Then, at step S11 to which the process proceeds when reproducing the content 41 is prohibited at step S9, the content of the content 41 is deleted from the list 44 of the contents.

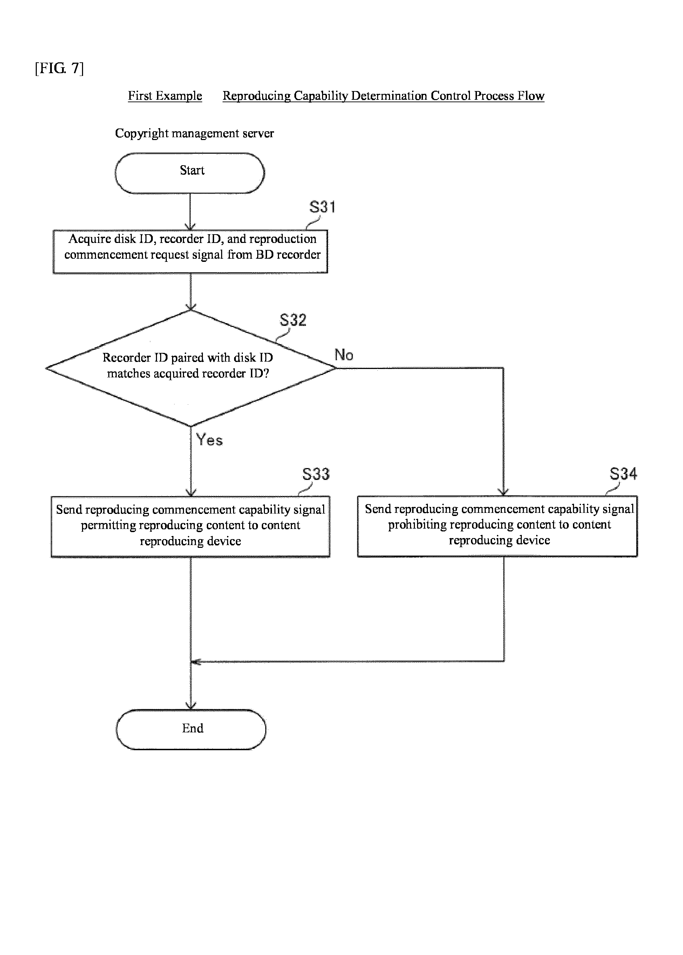

Meanwhile, in the copyright management server 2, at step S30, a reproduction capability determination control process and sending of the reproduction commencement capability signal (see FIG. 7) are performed. Afterward, the content reproduction control process flow in the copyright management server 2 ends.

Next, a reset capability determination control process flow of the content management system 100 according to one or more embodiments of the first example will be described with reference to FIG. 6. Processing in the copyright management server 2 is performed by the control unit 21.

Here, in the copyright management server 2 in one or more embodiments of the first example, when the combination of the disk ID 42 and the specific recorder ID 43 acquired from the BD recorder 1 does not match the combination of the disk ID 42 and the recorder ID stored in the storage unit 22, the ripping limit count of the disk ID 42 is reset. That is, when the recorder ID 43 acquired from the BD recorder 1 does not match the recorder ID paired with the disk ID 42 stored in the storage unit 22, the ripping limit count of the disk ID 42 is reset. This will be described below.

First, as illustrated in FIG. 6, in the copyright management server 2, at step S21, acquisition of the disk ID 42 and the recorder ID 43 is performed. That is, at step S3 described above, acquisition of the disk ID 42 and the recorder ID 43 sent from the BD recorder 1 is performed via the Internet 6. Afterward, the process proceeds to step S22.

Then, at step S22, it is determined whether there is a recorder ID paired with the disk ID 42 stored in the storage unit 22. Then, when there is a recorder ID paired with the disk ID 42, the process proceeds to step S23. Moreover, when there is no recorder ID paired with the disk ID 42, the process proceeds to step S26. For example, when the Blu-ray Disc 4 is not ripping processed in any BD recorder (in a situation of a brand-new product), a recorder ID paired with the disk ID 42 does not exist. In this situation, the process proceeds to step S26.

Then, at step S23, it is determined whether the recorder ID paired with the disk ID 42 matches the recorder ID 43 acquired at step S21. When the recorder ID paired with the disk ID 42 matches the recorder ID 43, the process proceeds to step S24. For example, when the copyright management server 2 acquires the information of the disk ID 42 and the recorder ID 43 from the BD recorder 1 when or before the reset capability determination control process currently being executed is performed and a control is performed that pairs the recorder ID 43 with the disk ID 42, the process proceeds to step S24.

Furthermore, at step S23, when the recorder ID paired with the disk ID 42 does not match the recorder ID 43, the process proceeds to step S27. For example, when another user who owns the BD recorder 1a performs the ripping process on the Blu-ray Disc 4 (disk ID 42) when or before the reset capability determination control process currently being executed is performed, the recorder ID 43a of the BD recorder 1a is paired with the disk ID 42. In this situation, because the recorder ID 43a paired with the disk ID 42 and the acquired recorder ID 43 do not match, the process proceeds to step S27.

Then, at step S24, it is determined whether the ripping limit count of the disk ID 42 is once or more. When the ripping limit count is once or more, the process proceeds to step S25, and when the ripping limit count is not once or more (zero times), the process proceeds to step S28.

Then, at step S25, the ripping limit count of the disk ID 42 is reduced by one. That is, when the ripping limit count of the disk ID 42 at step 24 or before is ten times, the ripping limit count is changed to nine times. Afterward, the reset capability determination control process in the copyright management server 2 ends.

Furthermore, at step S26, to which the process proceeds when there is no recorder ID paired with the disk ID 42 at step S22, the recorder ID 43 acquired from the BD recorder 1 is paired with the disk ID 42. Afterward, the process proceeds to step S24.

In one or more embodiments of the first example, when the recorder ID 43 acquired from the BD recorder 1 does not match the recorder ID paired with the disk ID 42 stored in the storage unit 22, the recorder ID paired with the disk ID 42 stored in the storage unit 22 is deleted, and the recorder ID 43 acquired from the BD recorder 1 is paired with the disk ID 42.

At step S27, to which the process proceeds when there is no matching with the recorder ID 43 at step S23, the ripping limit count of the disk ID 42 is reset. For example, when the ripping limit count of the disk ID 42 is zero times, the ripping limit count is returned to ten times. Then, the recorder ID paired with the disk ID 42 stored in the storage unit 22 is deleted. Then, the recorder ID 43 of the BD recorder 1 is paired with the disk ID 42. Afterward, the process proceeds to step S24.

Then, at step S28, to which the process proceeds when the ripping limit count is not once or more (zero times) at step S24, the signal that prohibits the ripping process is sent to the BD recorder 1. Afterward, the reset capability determination control process in the copyright management server 2 ends.

Next, a reproduction capability determination control process flow of the content management system 100 according to one or more embodiments of the first example will be described with reference to FIG. 7. Processing in the copyright management server 2 is performed by the control unit 21.

In one or more embodiments of the first example, each time the content 41 is reproduced, when the acquired combination of the disk ID 42 and the recorder ID 43 does not match the combination of the disk ID 42 and the recorder ID stored in the storage unit 22, the reproduction prohibition notification signal that prohibits commencement of reproduction the content 41 is sent to the BD recorder 1.

At step S31, in the copyright management server 2, the disk ID 42, the recorder ID 43, and the reproduction commencement request signal are acquired from the BD recorder 1. Afterward, the process proceeds to step S32. Then, at step S32, it is determined whether the recorder ID paired with the disk ID 42 matches the recorder ID 43 acquired at step S31. When the recorder ID paired with the disk ID 42 matches the recorder ID 43, the process proceeds to step S33, and when the recorder ID paired with the disk ID 42 does not match the recorder ID 43, the process proceeds to step S34.

Then, at step S33, a reproduction permission notification signal that permits reproduction of the content 41 is sent to the BD recorder 1. Afterward, the reproduction capability determination control process flow in the copyright management server 2 ends.

Furthermore, at step S34, to which the process proceeds when the recorder ID paired with the disk ID 42 does not match the recorder ID 43 at step S32, the reproduction commencement capability signal that prohibits reproduction of the content 41 is sent to the BD recorder 1. Afterward, the reproduction capability determination control process flow in the copyright management server 2 ends.

In one or more embodiments of the first example, effects such as below can be obtained.

In one or more embodiments of the first example, as above, the control unit 21 of the copyright management server 2 is configured to perform the reset capability determination control that resets the ripping limit count of the Blu-ray Disc 4 (disk ID 42) when the recorder ID 43 acquired from the BD recorder 1 does not match the recorder ID paired with the disk ID 42 stored in the storage unit 22. By this, even when the Blu-ray Disc 4 is transferred from the user who owns the BD recorder 1 to the other user who owns the other BD recorder 1 a, the other user can cause the BD recorder 1a to perform the ripping process. As a result, the ripping process can be performed by the BD recorder 1 owned by the user to whom the Blu-ray Disc 4 is transferred.

Furthermore, in one or more embodiments of the first example, as above, the control unit 21 of the copyright management server 2 is configured to delete the recorder ID paired with the disk ID 42 stored in the storage unit 22 of the copyright management server 2, pair the recorder ID acquired from the BD recorder 1, and perform the reset capability determination control that resets the ripping limit count of the Blu-ray Disc 4 when the recorder ID 43 acquired from the BD recorder 1 does not match the recorder ID paired with the disk ID 42 stored in the storage unit 22. By this, when the user who owns the Blu-ray Disc 4 changes, a new user can perform the ripping process the limited number of times.

Furthermore, in one or more embodiments of the first example, as above, the control unit 11 of the BD recorder 1 is configured to combine and send to the copyright management server 2 the disk ID 42 and the recorder ID 43 each time the content 41 is reproduced after performing the ripping process and the ripping limiting process (see FIG. 4). Moreover, the control unit 21 of the copyright management server 2 is configured to perform the control of sending the reproduction prohibition notification signal indicating prohibition of commencement of reproduction the content 41 to the BD recorder 1 when the recorder ID 43 acquired from the BD recorder 1 does not match the recorder ID paired with the disk ID 42 stored in the storage unit 22 each time the content 41 is reproduced. By this, reproducing the content 41 by a device other than the BD recorder corresponding to the recorder ID paired with the disk ID 42 stored in the storage unit 22 of the copyright management server 2 can be suppressed. As a result, a device other than the allowed BD recorder cannot reproduce the content 41.

Furthermore, in one or more embodiments of the first example, as above, the BD recorder 1 includes the OSD unit 16 that can output the list 44 of the contents (see FIG. 2) stored in the hard-disk drive 15 of the BD recorder 1. Moreover, the control unit 11 of the BD recorder 1 is configured to perform the control that causes the OSD unit 16 to output the list 44 of the contents (see FIG. 3) when the content 41 (reference numeral A in FIG. 2) for which commencement of reproduction is prohibited is deleted when the reproduction prohibition notification signal is acquired from the copyright management server 2. By this, a content for which reproduction is possible can be easily viewed by the user.

### (Second Example)

Next, a configuration of a content management system 200 according to one or more embodiments of a second example will be described with reference to FIG. 1. One or more embodiments of the second example, unlike the content management system 100 according to one or more embodiments of the first example configured to execute the information sending control during the ripping process, is configured to not perform the information sending control during the ripping process but to perform the information sending control that combines and sends to the copyright management server the disk ID and the recorder ID when commencing reproduction of the content for the first time after performing the ripping process.

As illustrated in FIG. 1, the content management system 200 according to one or more embodiments of the second example includes a BD recorder 201 and a copyright management server 202. Moreover, the BD recorder 201 includes a control unit 211, and the copyright management server 202 includes a control unit 221. Moreover, other configurations of the content management system 200 according to one or more embodiments of the second example are similar to those of the content management system 100 in one or more embodiments of the first example.

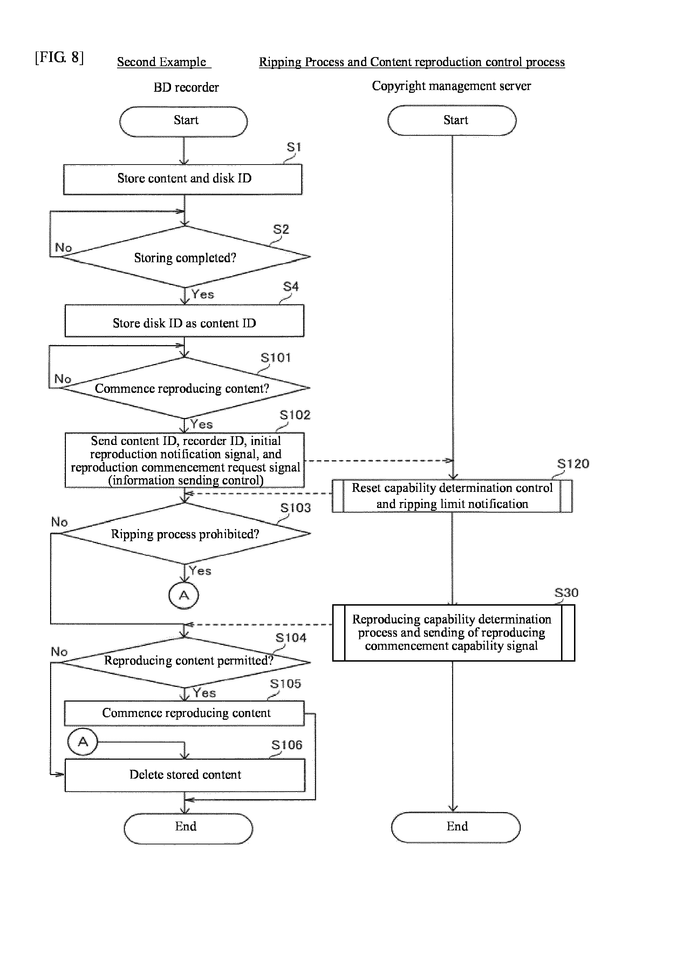

Next, the ripping process and the content reproduction control process flow of the content management system 200 according to one or more embodiments of the second example will be described with reference to FIG. 8. Processing in the BD recorder 201 is performed by the control unit 211. Moreover, processing in the copyright management server 202 is performed by the control unit 221.

Here, in one or more embodiments of the second example, the information sending control is not performed during the ripping process as is the case with the content management system 100 according to one or more embodiments of the first example (see FIG. 3), but, as illustrated in FIG. 8, the information sending control is performed that combines and sends to the copyright management server 202 the disk ID 42 and the recorder ID 43 by the BD recorder 201 when commencing reproduction of the content 41 for the first time after performing the ripping process.

As illustrated in FIG. 8, in the BD recorder 201, at steps S1 and S2, processes similar to those at steps S1 and S2 in the ripping process and the ripping limiting process according to one or more embodiments of the first example are performed. After step S2, in one or more embodiments of the second example, the process proceeds to step S4. That is, the information sending control is not performed during the ripping process. Then, at step S4, a process similar to step S4 by the BD recorder 1 according to one or more embodiments of the first example is performed. Afterward, the process proceeds to step S101.

Then, at step S101, by an operation of the user, it is determined whether the operation for commencing reproduction of the content 41 is accepted. This determination is repeated until the operation for commencing reproduction is accepted, and when the operation for commencing reproduction is accepted, the process proceeds to step S102.

Then, at step S102, the content ID 45, the recorder ID 43, an initial reproduction notification signal that indicates reproduction of the content 41 for the first time after the ripping process, and the reproduction request signal are sent to the copyright management server 202. Afterward, the process proceeds to step S103.

Then, at step S103, it is determined whether the signal prohibiting the ripping process is acquired from the copyright management server 202. When the signal prohibiting the ripping process is acquired, the process proceeds to step S106, and when the signal prohibiting the ripping process is not acquired, the process proceeds to step S104.

Then, at step S104, it is determined whether reproducing the content 41 is permitted. That is, it is determined whether the reproduction commencement capability signal prohibiting reproduction of the content 41 is acquired at step S30 that will be described below in the copyright management server 202. When the signal prohibiting reproduction of the content 41 is acquired and reproducing the content 41 is not permitted, the process proceeds to step S106, and when the signal prohibiting the ripping process is not acquired and reproducing the content 41 is permitted, the process proceeds to step S105.

Then, at step S105, reproduction of the content 41 commences. Afterward, the ripping process and the content reproduction control process in the BD recorder 201 end.

Here, in one or more embodiments of the second example, when the reproduction commencement capability signal prohibiting reproduction of the content 41 (reproduction prohibition notification signal) is acquired from the copyright management server 202, the content 41 stored in the storage unit 22 is deleted.

At step S106, to which the process proceeds when the ripping process is prohibited at step S103 or when the reproduction commencement capability signal prohibiting reproduction of the content 41 is acquired at step S104, the content 41 stored in the hard-disk drive 15 is deleted. Afterward, the ripping process and the content reproduction control process in the BD recorder 201 end.

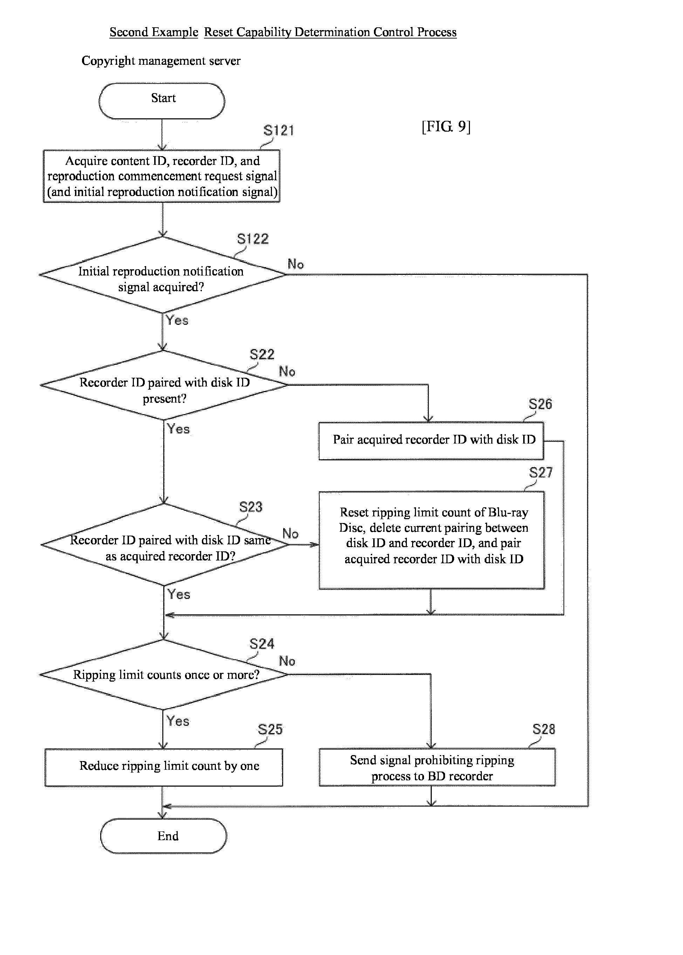

Meanwhile, in the copyright management server 202, at step S120, the reset capability determination control and ripping limiting notification are performed (see FIG. 9). Afterward, the process proceeds to step S30. Then, at step S30, a process similar to the reproduction capability determination control process (see FIG. 7) in the copyright management server 2 according to one or more embodiments of the first example is performed. Afterward, the ripping process and the content reproduction control process in the copyright management server 202 end.

Next, the reset capability determination control process flow of the content management system 200 according to one or more embodiments of the second example will be described with reference to FIG. 9. Processing in the copyright management server 202 is performed by the control unit 221.

First, as illustrated in FIG. 9, at step S121, acquisition of the content ID 45 (same information as the disk ID 42), the recorder ID 43, the reproduction commencement request signal, and the initial reproduction notification signal is performed. That is, acquisition of the signal of the BD recorder 201 sent at step S102 is performed. When the initial reproduction notification signal is not included in the signal of the BD recorder 201 sent at step S102, the initial reproduction notification signal is not acquired. Afterward, the process proceeds to step S122.

Then, at step S122, it is determined whether the initial reproduction notification signal is acquired. That is, at step S121, it is determined whether the initial reproduction notification signal is included in the signal acquired from the BD recorder 201. When the initial reproduction notification signal is acquired, the process proceeds to step S22, and when the initial reproduction notification signal is not acquired, the reset capability determination control process flow in the copyright management server 202 ends.

Then, at steps S22 to S28, processes similar to those at steps S22 to S28 of the reset capability determination control process flow (see FIG. 6) of the content management system 100 according to one or more embodiments of the first example are performed.

In one or more embodiments of the second example, effects such as below can be obtained.

In one or more embodiments of the second example, as above, the control unit 211 of the BD recorder 201 is configured to perform the control that deletes the content 41 stored in the hard-disk drive 15 of the BD recorder 201 when the reproduction commencement capability signal (reproduction prohibition notification signal) prohibiting reproduction of the content 41 is acquired from the copyright management server 202. By this, reproducing the content 41 by a BD recorder other than the BD recorder corresponding to the combination of the disk ID 42 and the recorder ID stored in the storage unit 22 of the copyright management server 202 can be reliably suppressed.

Furthermore, in one or more embodiments of the second example, as above, the control unit 211 of the BD recorder 201 is configured to not perform the information sending control during the ripping process but to perform the information sending control that sends the disk ID 42 and the recorder ID 43 to the copyright management server 2 when reproduction of the content 41 is commenced for the first time after performing the ripping process. Moreover, the control unit 221 of the copyright management server 202 is configured to acquire the disk ID 42 and the recorder ID 43 and perform the reset capability determination control. By this, the information sending control is not performed during the ripping process; therefore, a time required for the ripping process can be shortened by an amount corresponding to the information sending control not being performed. Moreover, other effects of the content management system 200 according to one or more embodiments of the second example are similar to those of the content management system 100 in one or more embodiments of the first example.

### (Third Example)

Next, a configuration of a content management system 300 according to one or more embodiments of a third example will be described with reference to FIG. 1. One or more embodiments of the third example are configured to perform a control of sending a deletion request signal (or cancel request signal) for deleting (or canceling) the pairing (or association) between the disk ID and the recorder ID stored in the storage unit of the copyright management server to the copyright management server based on an operation of the user. Moreover, the control unit of the copyright management server is configured to perform the control that deletes the combination between the disk ID and the recorder ID according to the acquired deletion request signal.

As illustrated in FIG. 1, the content management system 300 according to one or more embodiments of the third example includes a BD recorder 301, a BD recorder 301a, and a copyright management server 302. Moreover, the BD recorder 301 includes a control unit 311 and a hard-disk drive 315, and the copyright management server 302 includes a control unit 321. The BD recorder 301 a includes the recorder ID 43a, and other configurations of the BD recorder 301a are configured similarly to those of the BD recorder 301. For example, the BD recorder 301 and the BD recorder 301a according to one or more embodiments of the third example are owned by the same user.

In one or more embodiments of the third example, the control unit 311 of the BD recorder 301 is configured to perform the control of sending the deletion request signal for deleting the pairing between the disk ID 42 and the recorder ID 43 stored in the storage unit 22 of the copyright management server 302 to the copyright management server 302 based on the operation of the user. Moreover, the control unit 321 of the copyright management server 302 is configured to perform the control that deletes the pairing between the disk ID 42 and the recorder ID 43 according to the acquired deletion request signal.

Furthermore, in one or more embodiments of the third example, the control unit 311 of the BD recorder 301 is configured to perform a control that stores the ripping process count in the hard-disk drive 315 of the BD recorder 301. The control unit 311 is configured to combine the number of times the ripping process is performed from the Blu-ray Disc 4 with the disk ID 42 of the Blu-ray Disc 4 and store this in the hard-disk drive 315.

Furthermore, the disk ID 42 and the recorder ID 43a of the other BD recorder 301a are paired, and the pairing between the disk ID 42 and the recorder ID 43 of the BD recorder 301 is deleted. Then, the deletion request signal is sent from the BD recorder 301a to the copyright management server 302, and the pairing between the disk ID 42 and the recorder ID 43a is deleted. In this situation, the control unit 311 of the BD recorder 301 is configured to perform a control of reading and sending to the copyright management server 302 the ripping process count from the hard-disk drive 315 when reproducing the content 41.

Furthermore, the control unit 321 of the copyright management server 302 is configured to perform a control of acquiring the ripping process count sent from the BD recorder 301. Furthermore, the control unit 321 is configured to perform a control that stores by reducing by an amount corresponding to the ripping process count acquired from the ripping limit count stored in the storage unit 22 of the copyright management server 302. That is, the ripping limit count of the BD recorder 301 is reopened from a count at a time when the pairing between the disk ID 42 and the recorder ID 43 of the BD recorder 301 is deleted by the disk ID 42 and the recorder ID 43a of the other BD recorder 301 a being paired.

By repeating deleting pairings by the two BD recorders, the ripping limit count is repeatedly reset, and it becomes possible to suppress the ripping process from being performed on one BD recorder a number of times equal to or greater than the ripping limit count. Moreover, other configurations of the content management system 300 according to one or more embodiments of the third example are similar to those of the content management system 100 in one or more embodiments of the first example.

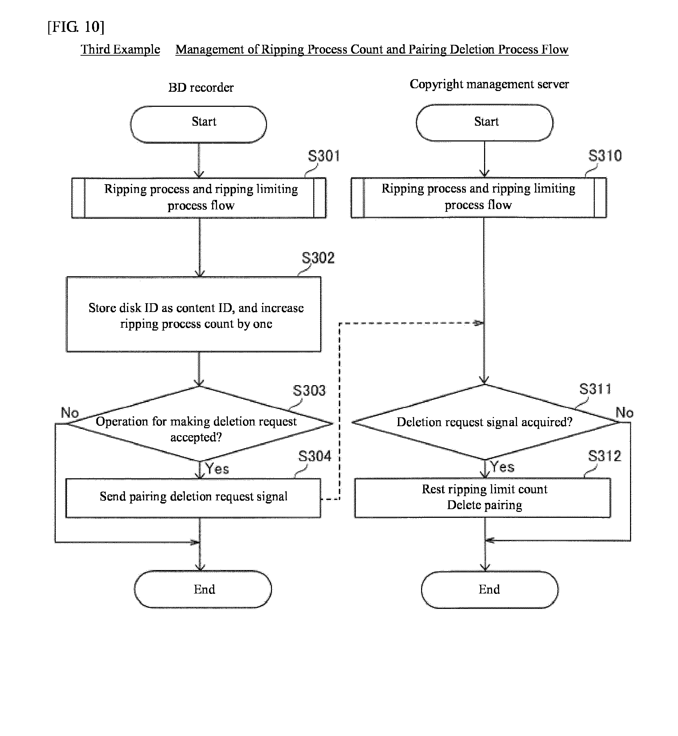

Next, management of a pairing process count and a pairing deletion process flow of the content management system 300 according to one or more embodiments of the third example will be described with reference to FIG. 10. Processing in the BD recorder 301 is performed by the control unit 311. Moreover, processing in the copyright management server 302 is performed by the control unit 321.

First, as illustrated in FIG. 10, in the BD recorder 301, at step S301, the ripping process and the ripping limiting process are executed. The ripping process and the ripping limiting process of step S301 perform processes similar to the ripping process and the ripping limiting process (see FIG. 4) of the BD recorder 1 in one or more embodiments of the first example. Afterward, the process proceeds to step S302.

Then, at step S302, the disk ID 42 is stored as the content ID 45 in the hard-disk drive 315 of the BD recorder 301, and the ripping process count stored in the hard-disk drive 315 is increased by one. Afterward, the process proceeds to step S303.

Then, at step S303, based on an operation of the user, it is determined whether an operation for making a deletion request of the pairing between the disk ID 42 and the recorder ID 43 is accepted. When the operation for making the deletion request is accepted, the process proceeds to step S304, and when the operation for making the deletion request is not accepted, the management of the pairing process count and the pairing deletion process flow in the BD recorder 301 end.

Then, at step S304, the deletion request signal of the pairing is sent to the copyright management server 302. Afterward, the pairing deletion control process flow in the BD recorder 301 ends.

Meanwhile, in the copyright management server 302, at step S310, the ripping process and the ripping limiting process are executed. The ripping process and the ripping limiting process of step S310 perform processes similar to the ripping process and the ripping limiting process (see FIG. 4) in the copyright management server 2 in one or more embodiments of the first example. Afterward, the process proceeds to step S311.

Then, at step S311, it is determined whether the deletion request signal of the pairing is acquired from the BD recorder 301. When the deletion request signal is acquired, the process proceeds to step S312, and when the deletion request signal is not acquired, management of the pairing process count and the pairing deletion process flow in the copyright management server 302 end.

Then, at step S312, deletion of the pairing is performed. Afterward, management of the pairing process count and the pairing deletion process flow end in the copyright management server 302.

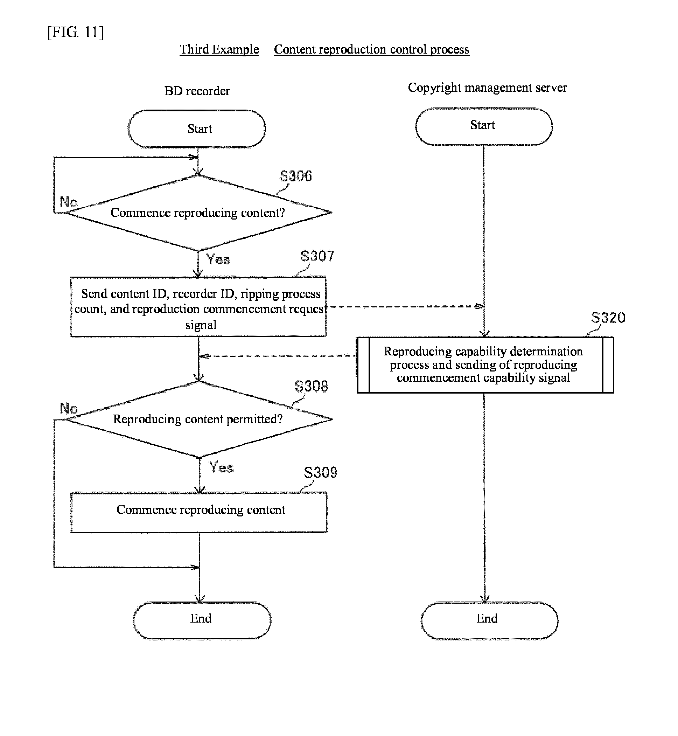

Next, the content reproduction control process of the content management system 300 according to one or more embodiments of the third example will be described with reference to FIG. 11. Processing in the BD recorder 301 is performed by the control unit 311. Moreover, processing in the copyright management server 302 is performed by the control unit 321.

First as illustrated in FIG. 11, in the BD recorder 301, at step S306, it is determined whether the operation for commencing reproduction of the content 41 is accepted. This determination is repeated until the operation for commencing reproduction of the content 41 is accepted, and when the operation for commencing reproduction of the content 41 is accepted, the process proceeds to step S307.

Then, at step S307, the content ID 45 (same information as the disk ID 42), the recorder ID 43, the ripping process count, and the reproduction commencement request signal are sent to the copyright management server 302. Afterward, the process proceeds to step S308.

Then, at step S308, it is determined whether reproducing the content 41 is permitted. When reproducing the content 41 is permitted, the process proceeds to step S309, and when reproducing the content 41 is not permitted, the content reproduction control process in the BD recorder 301 ends.

Then, at step S309, reproduction of the content 41 commences. Afterward, the content reproduction control process ends in the BD recorder 301.

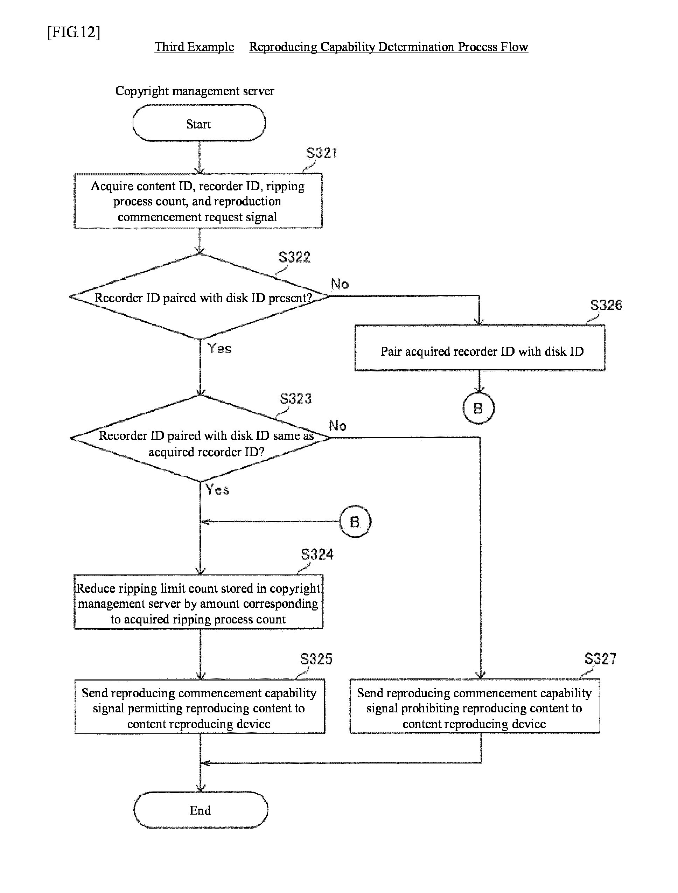

Meanwhile, in the copyright management server 302, at step S320, a reproduction commencement capability determination process and a process of sending the reproduction commencement capability signal (see FIG. 12) are performed. Afterward, the content reproduction control process ends in the copyright management server 302.

Next, the reproduction capability determination control process flow of the content management system 300 according to one or more embodiments of the third example will be described with reference to FIG. 12. Processing in the copyright management server 302 is performed by the control unit 321.

First, as illustrated in FIG. 12, at step S321, the content ID 45 (same information as the disk ID 42), the recorder ID 43, the ripping process count, and the reproduction commencement request signal are acquired. Afterward, the process proceeds to step S322. Then, at step S322, it is determined whether there is a recorder ID paired with the acquired disk ID 42. When there is a recorder ID paired with the disk ID 42, the process proceeds to step S323, and when there is no recorder ID paired with the disk ID 42, the process proceeds to step S326.

Then, at step S323, it is determined whether the recorder ID paired with the disk ID 42 is the same as the acquired recorder ID 43. When the recorder ID paired with the disk ID 42 and the acquired recorder ID 43 are the same, the process proceeds to step S324, and when the recorder ID paired with the disk ID 42 and the acquired recorder ID 43 are not the same, the process proceeds to step S327.

Then, at step S324, the ripping limit count stored in the storage unit is reduced by an amount corresponding to the acquired ripping process count. Afterward, the process proceeds to step S325. Then, at step S325, the reproduction commencement capability signal permitting reproduction of the content 41 is sent to the BD recorder 301. Afterward, the reproduction capability determination control process flow in the copyright management server 302 ends.

Furthermore, at step S326, to which the process proceeds when there is no recorder ID paired with the disk ID 42 at step S322, the acquired recorder ID 43 is paired with the disk ID 42. Afterward, the process proceeds to step S324.

Furthermore, at step S327, to which the process proceeds when the recorder ID paired with the disk ID 42 at step S323 is not the same as the acquired recorder ID 43, the reproduction commencement capability signal that prohibits reproduction of the content 41 is sent to the BD recorder 301. Afterward, the reproduction capability determination control process flow in the copyright management server 302 ends.

Next, a specific example of the pairing deletion process of the content management system 300 according to one or more embodiments of the third example will be described with reference to FIGS. 10 to 12.

As illustrated in FIG. 10, when the initial count of the ripping limit count of the Blu-ray Disc 4 is ten times, the user causes the BD recorder 301 to execute the process (ripping process) of steps S301 and S302. Then, when the user causes the BD recorder 301 to perform the ripping process three times without performing the operation for making the deletion request, the ripping process count is stored as three times in the hard-disk drive 315 of the BD recorder 301. In this situation, in the storage unit 22 of the copyright management server 302, the disk ID 42 and the recorder ID 43 are paired and stored.

Next, by the user causing the BD recorder 301a to execute the process (ripping process) of steps S301 and S302, the pairing between the disk ID 42 and the recorder ID 43 stored in the storage unit 22 of the copyright management server 302 is deleted, and the disk ID 42 and the recorder ID 43a of the BD recorder 1a are paired. In this situation, the ripping limit count of the disk ID 42 is reset and becomes ten times. Afterward, for example, when a need arises for the user to reproduce the content 41 by the BD recorder 301, the operation for making the deletion request is performed. Then, the pairing between the disk ID 42 and the recorder ID 43a is deleted by the copyright management server 302.

Afterward, when the user performs the operation for commencing reproduction of the content 41, the reproduction commencement request signal and the pairing process count are sent from the BD recorder 301 to the copyright management server 302. As illustrated in FIGS. 10 and 11, the recorder ID 43 is again paired with the disk ID 42 by the copyright management server 302. At this time, as illustrated in FIG. 12, in the copyright management server 302, the ripping limit count is reset and becomes ten times; meanwhile, in the copyright management server 302, the ripping limit count is reduced by an amount corresponding to the ripping process count (three times) acquired from the BD recorder 301 and thus becomes seven times. By this, the pairing between the disk ID 42 and the recorder ID 43 stored in the storage unit 22 of the copyright management server 302 can be deleted, and the BD recorder 301 can be suppressed from performing the ripping process in excess of ten times, which is the initial count of the ripping limit count.

In one or more embodiments of the third example, effects such as below can be obtained.

In one or more embodiments of the third example, as above, the control unit 311 of the BD recorder 301 is configured to perform the control of sending the deletion request signal for deleting the combination of the disk ID 42 and the recorder ID 43 stored in the storage unit 22 of the copyright management server 302 to the copyright management server 302 based on the operation of the user. Moreover, the control unit 321 of the copyright management server 302 is configured to perform the control that deletes the combination of the disk ID 42 and the recorder ID 43 according to the acquired deletion request signal. By this, the pairing between the disk ID 42 and the recorder ID 43 stored in the storage unit 22 of the copyright management server 302 can be deleted as needed by the user. Moreover, other effects of the content management system 300 according to one or more embodiments of the third example are similar to those of the content management system 100 in one or more embodiments of the first example.

### (Fourth Example)

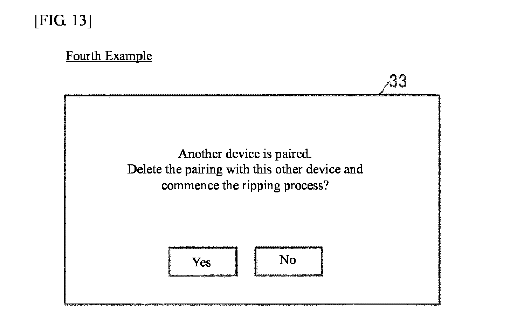

Next, a configuration of a content management system 400 according to one or more embodiments of a fourth example will be described with reference to FIGS. 1 and 13. In one or more embodiments of the fourth example, the control unit of the BD recorder, when performing the information sending control, is configured to perform a control of sending to the copyright management server, in addition to the disk ID and the recorder ID, a comparison result request signal for requesting a comparison result indicating whether the recorder ID matches the recorder ID paired with the disk ID stored in the storage unit of the copyright management server.

As illustrated in FIG. 1, the content management system 400 according to one or more embodiments of the fourth example includes a BD recorder 401 and a copyright management server 402. Moreover, the BD recorder 401 includes a control unit 411, and the copyright management server 402 includes a control unit 421.

Here, in one or more embodiments of the fourth example, the control unit 411 of the BD recorder 401, when performing the information sending control, is configured to perform the control of sending to the copyright management server 402, in addition to the disk ID 42 and the recorder ID 43, the comparison result request signal for requesting the comparison result indicating whether the recorder ID 43 matches the recorder ID paired with the disk ID 42 stored in the storage unit 22 of the copyright management server 402. Moreover, the control unit 421 of the copyright management server 402 is configured to perform a control of acquiring the comparison result request signal and sending the comparison result to the BD recorder 401.

Furthermore, as illustrated in FIG. 13, the control unit 411 of the BD recorder 401 is configured to perform a control of acquiring the comparison result from the copyright management server 402 and, based on the acquired comparison result, displaying a display asking the user whether to execute the ripping process on the display unit 33 of the television device 3 via the OSD unit 16. For example, the display asking the user is configured so a display such as "Another device is paired. Delete the pairing with this other device and commence the ripping process?" is displayed together with operation unit displays such as "Yes" and "No." Moreover, other configurations of the content management system 400 according to one or more embodiments of the fourth example are similar to those of the content management system 100 in one or more embodiments of the first example.

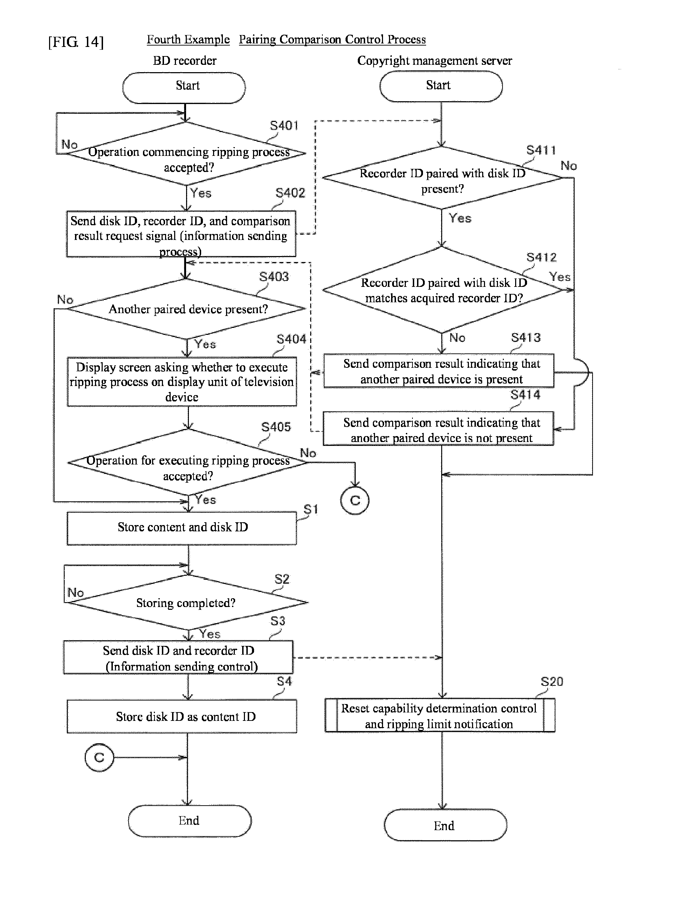

Next, a pairing comparison control process flow of the content management system 400 according to one or more embodiments of the fourth example will be described with reference to FIG. 14. Processing of the BD recorder 401 is performed by the control unit 411. Moreover, processing in the copyright management server 402 is performed by the control unit 421.

First as illustrated in FIG. 14, in the BD recorder 401, at step S401, it is determined whether the operation for commencing the ripping process is accepted. This determination is repeated until the operation for commencing the ripping process is accepted, and when the operation for commencing the ripping process is accepted, the process proceeds to step S402.

Then, at step S402, the disk ID 42 and the recorder ID 43 are sent to the copyright management server 402. Afterward, the process proceeds to step S403. Then, at step S403, the comparison result is acquired from the copyright management server 402, and, based on the acquired comparison result, it is determined whether there is a recorder ID paired with the disk ID 42 that differs from the recorder ID 43. When there is a recorder ID paired with the disk ID 42 that differs from the recorder ID 43, the process proceeds to step S404, and when there is no recorder ID paired with the disk ID 42 that differs from the recorder ID 43, the process proceeds to step S 1.

Then, at step S404, the display (see FIG. 13) asking whether to execute the ripping process is output from the OSD unit 16 to the television device 3 and displayed on the display unit 33. Afterward, the process proceeds to step S405.

Then, at step S405, it is determined whether the operation for executing the ripping process is accepted by the operation of the user. When the operation for executing the ripping process is accepted, the process proceeds to step S1, and in the situation where the operation for executing the ripping process is not accepted, a pairing selection control process flow in the BD recorder 401 ends.

Then, at steps S1 to S4, a process similar to those at steps S1 to S4 of the ripping process and the ripping limiting process flow by the BD recorder 1 according to one or more embodiments of the first example is executed. Afterward, the pairing selection control process flow in the BD recorder 401 ends.

Meanwhile, in the copyright management server 402, at step S411, it is determined whether there is a disk ID paired with the disk ID 42. When there is a disk ID paired with the disk ID 42, the process proceeds to step S412, and when there is no disk ID paired with the disk ID 42, the process proceeds to step S414.

Then, at step S412, it is determined whether the disk ID paired with the disk ID 42 and the disk ID 42 acquired from the BD recorder 401 match. When the disk ID paired with the disk ID 42 and the disk ID 42 acquired from the BD recorder 401 match, the process proceeds to step S414, and when the disk ID paired with the disk ID 42 and the disk ID 42 acquired from the BD recorder 401 do not match, the process proceeds to step S413.

Then, at step S413, a comparison result indicating that there is another device that is paired is sent to the BD recorder 401. Afterward, the process proceeds to step S20.

Then, at step S414, to which the process proceeds when there is no disk ID paired with the disk ID 42 at step S411 or when the disk ID 42 acquired from the BD recorder 401 matches at step S412, a comparison result indicating that there is no other device that is paired is sent to the BD recorder 401. Afterward, the process proceeds to step S20.

Then, at step S20, a process similar to the reset capability determination control process (see FIG. 6) in the copyright management server 2 according to one or more embodiments of the first example is performed. Afterward, the pairing comparison control process flow in the copyright management server 402 ends.

In one or more embodiments of the fourth example, effects such as below can be obtained.

In one or more embodiments of the fourth example, as above, the control unit 411 of the BD recorder 401, when performing the information sending control, is configured to perform the control of sending to the copyright management server 402, in addition to the disk ID 42 and the recorder ID 43, the comparison result request signal for requesting the comparison result indicating whether the recorder ID 43 matches the recorder ID paired with the disk ID 42 stored in the storage unit 22 of the copyright management server 402. Moreover, the control unit 421 of the copyright management server 402 is configured to perform the control of acquiring the comparison result request signal and sending the comparison result to the BD recorder 401. By this, it can be easily confirmed whether the recorder ID 43 is paired with the disk ID 42 owned by the user on a BD-recorder 401 side. Moreover, other effects of the content management system 400 according to one or more embodiments of the fourth example are similar to those of the content management system 100 according to one or more embodiments of the first example.

### (Fifth Example)

Next, a configuration of a content management system 500 according to one or more embodiments of a fifth example will be described with reference to FIG. 1. One or more embodiments of the fifth example, unlike the content management system 100 according to one or more embodiments of the first example configured to pair one recorder ID to the disk ID, is configured to pair a plurality of recorder IDs to the disk ID.

As illustrated in FIG. 1, the content management system 500 according to one or more embodiments of the fifth example includes a BD recorder 501 and a copyright management server 502. Moreover, the BD recorder 501 includes a control unit 511, and the copyright management server 502 includes a control unit 521.

Here, in one or more embodiments of the fifth example, the control unit 511 of the copyright management server 502 is configured to enable pairing the plurality of recorder IDs to one disk ID 42. Moreover, a configuration is such that when a number of recorder IDs combined with the disk ID 42 stored in the storage unit 22 of the copyright management server 502 exceeds a predetermined plural allowed number, the reset capability determination control that resets the ripping limit count of the Blu-ray Disc 4 is performed. Moreover, other configurations of the content management system 500 according to one or more embodiments of the fifth example are similar to those of the content management system 100 in one or more embodiments of the first example.

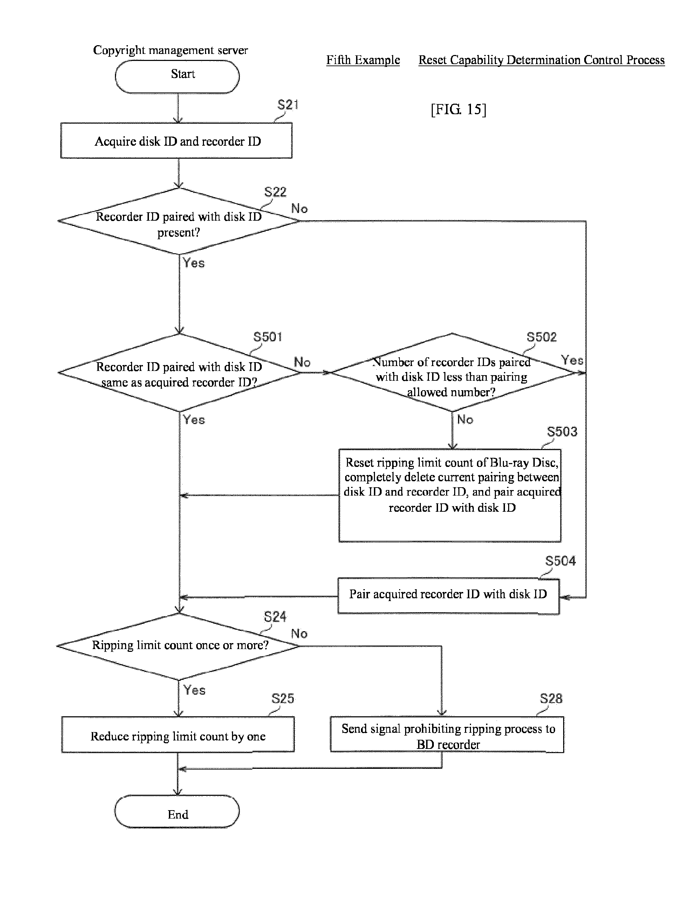

Next, the reset capability determination control process flow of the content management system 500 according to one or more embodiments of the fifth example will be described with reference to FIG. 15. Processing in the copyright management server 502 is performed by the control unit 521.

First, as illustrated in FIG. 15, steps S21 and S22 perform a process similar to that of steps S21 and S22 in the reset capability determination control process (see FIG. 6) according to one or more embodiments of the first example. Here, in one or more embodiments of the fifth example, at step S22, when there is a recorder ID paired with the disk ID 42, the process proceeds to step S501, and when there is no recorder ID paired with the disk ID 42, the process proceeds to step S504.

Then, at step S501, it is determined whether the recorder ID paired with the disk ID 42 and the recorder ID 43 acquired from the BD recorder 501 are the same. When the recorder ID paired with the disk ID 42 and the recorder ID 43 acquired from the BD recorder 401 are the same, the process proceeds to step S24, and when the recorder ID paired with the disk ID 42 and the recorder ID 43 acquired from the BD recorder 401 are not the same, the process proceeds to step S502.

Here, in one or more embodiments of the fifth example, at step S502, it is determined whether the number of recorder IDs paired with the disk ID 42 is less than the allowed number (for example, five devices). When the number of recorder IDs paired with the disk ID 42 is less than the allowed number, the process proceeds to step S503, and when the number of recorder IDs paired with the disk ID 42 has reached the allowed number, the process proceeds to step S504.

Then, at step S503, the ripping limit count of the Blu-ray Disc 4 is reset (for example, returned to ten times), the pairing between the disk ID 42 and the recorder ID is completely deleted, and the acquired recorder ID 43 is paired with the disk ID 42. Afterward, the process proceeds to step S24.

Then, at step S504, to which the process proceeds when the number of recorder IDs paired with the disk ID 42 at step S503 is less than the allowed number, the acquired recorder ID 43 is paired with the disk ID 42. Afterward, the process proceeds to step S24.

Then, at steps S24, S25, and S28, a process similar to that of steps S24, S25, and S28 in the reset capability determination control process (see FIG. 6) in one or more embodiments of the first example is performed. Afterward, the reset capability determination control process flow in the copyright management server 502 ends.

In one or more embodiments of the fifth example, effects such as below can be obtained.

In one or more embodiments of the fifth example, as above, the control unit 511 of the copyright management server 502 is configured to pair the plurality of recorder IDs to one disk ID 42 and is configured to perform the reset capability determination control that resets the ripping limit count of the Blu-ray Disc 4 when the number of recorder IDs combined with the disk ID 42 stored in the storage unit 22 of the copyright management server 2 exceeds the predetermined plural allowed number. By this, even when the user owns a plurality of BD recorders 501, the ripping process can be performed in the plurality of BD recorders 501 at or below the allowed number, and reproduction of the content 41 is possible in any of the plurality of BD recorders 501 at or below the allowed number. Moreover, even when the Blu-ray Disc 4 is transferred to another user and the number of recorder IDs combined with the disk ID 42 stored in the storage unit 22 of the copyright management server 502 exceeds the predetermined plural allowed number, the other user can perform the ripping process and reproduce the content. Moreover, other effects of the content management system 500 according to one or more embodiments of the fifth example are similar to those of the content management system 100 in one or more embodiments of the first example.

### (Sixth Example)

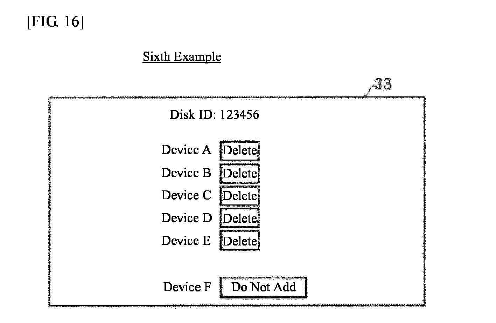

Next, a configuration of a content management system 600 according to one or more embodiments of a sixth example will be described with reference to FIGS. 1 and 16. One or more embodiments of the sixth example is configured such that a plurality of recorder IDs is paired with the disk ID and is configured to select the recorder ID to be paired with the disk ID based on an operation of the user of the BD recorder.

As illustrated in FIG. 1, the content management system 600 according to one or more embodiments of the sixth example includes a BD recorder 601 and a copyright management server 602. Moreover, the BD recorder 601 includes a control unit 611, and the copyright management server 602 includes a control unit 621.

Here, in one or more embodiments of the sixth example, the control unit 611 of the copyright management server 602 is configured to enable pairing the plurality of recorder IDs to one disk ID 42. Moreover, a configuration is such that when the number of recorder IDs paired with the disk ID 42 stored in the storage unit 22 of the copyright management server 602 has reached the predetermined plural allowed number (for example, five devices), the recorder ID to be paired with the disk ID 42 can be selected based on the operation of the user.

As illustrated in FIG. 16, the control unit 611 of the BD recorder 601, when a comparison result indicating a need to select the pairing is acquired from the copyright management server 602, is configured to perform a control that displays a display to the user for selecting the pairing on the display unit 33 of the television device 3 via the OSD unit 16. For example, the display for selecting the pairing includes the disk ID 42 (or a title of the content 41). Moreover, this display includes a device name (or the recorder ID) of the BD recorder paired with the disk ID 42. Moreover, this display includes a device name (device F in FIG. 16) of the recorder ID 43. Moreover, this display includes an operation unit display (for example, "Delete" in FIG. 16) for selecting deletion of the pairing. Moreover, this display includes an operation unit display ("Do Not Add" in FIG. 16) for stopping the ripping process without deleting the pairing.

Furthermore, the control unit 621 of the copyright management server 602 is configured to perform a control that acquires a selection result from the BD recorder 601 and performs pairing of the disk ID to the disk ID based on the acquired selection result. Moreover, other configurations of the content management system 600 according to one or more embodiments of the sixth example are similar to those of the content management system 100 in one or more embodiments of the first example.

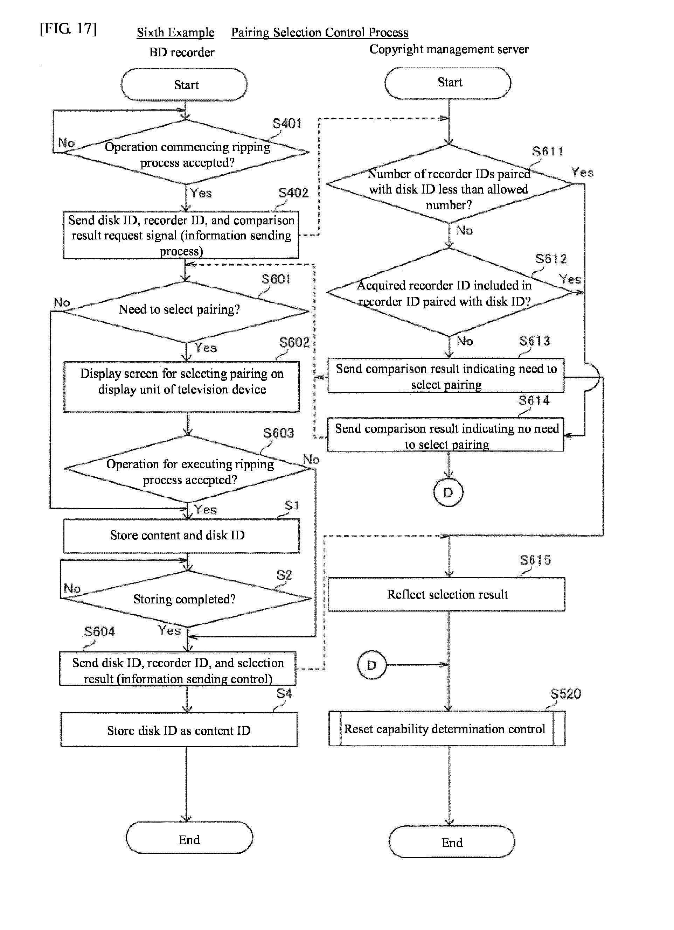

Next, the pairing selection control process flow of the content management system 600 according to one or more embodiments of the sixth example will be described with reference to FIG. 17. Processing in the BD recorder 601 is performed by the control unit 611. Processing in the copyright management server 602 is performed by the control unit 621.

First, as illustrated in FIG. 17, in the BD recorder 601, at steps S401 and S402, a process similar to that of steps S401 and S402 in the pairing comparison control process flow of the BD recorder 401 according to one or more embodiments of the fourth example is performed. Afterward, the process proceeds to step S601.

Then, at step S601, it is determined whether the pairing needs to be selected based on the comparison result from the copyright management server 602 that will be described below. When there is a need to select the pairing, the process proceeds to step S602, and when there is no need to select the pairing, the process proceeds to step S1.

Then, at step S602, the display for selecting the pairing is output from the OSD unit 16, and the display (see FIG. 16) for selecting the pairing is displayed on the display unit 33 of the television device 3. Afterward, the process proceeds to step S603.

Then, at step S603, it is determined whether the operation for executing the ripping process according to the operation of the user is accepted. For example, when the user, based on the display for selecting the pairing displayed on the display unit 33, selects to change the disk ID 42 from being paired with the recorder ID of the other BD recorder paired with the disk ID 42 to being paired with the recorder ID 43 of the BD recorder 601, the process proceeds to step S1. When the recorder ID 43 of the BD recorder 601 is not paired with the disk ID 42, the process proceeds to step S604.

Then, at steps S1 and S2, a process similar to those at steps S1 and S2 by the ripping process and the ripping limiting process (see FIG. 4) according to one or more embodiments of the first example is performed. Afterward, the process proceeds to step S604.

Then, at step S604, the disk ID 42, the recorder ID 42, and the selection result selected at step S602 are sent to the copyright management server 602. Afterward, the process proceeds to step S4. Then, at step S4, a process similar to that at step S4 by the ripping process and the ripping limiting process (see FIG. 4) according to one or more embodiments of the first example is performed. Afterward, the pairing selection control process flow by the BD recorder 601 ends.

Meanwhile, in the copyright management server 602, at step S611, it is determined whether the number of recorder IDs paired with the disk ID 42 stored in the storage unit 22 is less than the allowed number. When the number of recorder IDs is less than the allowed number, the process proceeds to step S614, and when the number of recorder IDs is not less than the allowed number (has reached the allowed number), the process proceeds to step S612.

Then, at step S612, it is determined whether the acquired recorder ID 43 is included in the recorder ID paired with the disk ID 42 stored in the storage unit 22. When the recorder ID 43 is included, the process proceeds to step S613, and when the recorder ID 43 is not included, the process proceeds to step S614.

Then, at step S613, the comparison result that indicates that there is a need to select the pairing is sent to the BD recorder 601. Afterward, the process proceeds to step S615.

Furthermore, at step S614, the comparison result that indicates that there is no need to select the pairing is sent to the BD recorder 601. Afterward, the process proceeds to step S520.

Then, at step S615, the selection result is reflected. That is, the pairing with the disk ID 42 is changed based on the selection result acquired from the BD recorder 601. Afterward, the process proceeds to step S520.

Then, at step S520, a process similar to the reset capability determination control process (see FIG. 15) according to one or more embodiments of the fifth example is performed. Afterward, the pairing selection control process flow by the copyright management server 602 ends.

In one or more embodiments of the sixth example, effects such as below can be obtained.

In one or more embodiments of the sixth example, as above, the control unit 611 of the copyright management server 602 is configured to pair the plurality of recorder IDs to one disk ID 42 and is configured so the recorder ID paired with the disk ID 42 can be selected based on the operation of the user when the number of recorder IDs paired with the disk ID 42 stored in the storage unit 22 of the copyright management server 602 has reached the predetermined plural allowed number. By this, the paired device can be changed at will as needed by the user. Moreover, other effects of the content management system 600 according to one or more embodiments of the sixth example are similar to those of the content management system 100 in one or more embodiments of the first example.

### (Seventh Example)

Next, a configuration of a content management system 700 according to one or more embodiments of a seventh example will be described with reference to FIG. 1. In one or more embodiments of the seventh example, the control unit of the BD recorder is configured to permit reproduction of the ripping-processed content for a predetermined period or a predetermined limit count when connection to the copyright management server is not possible.

As illustrated in FIG. 1, the content management system 700 according to one or more embodiments of the seventh example includes a BD recorder 701 and a copyright management server 702. Moreover, the BD recorder 701 includes a control unit 711, and the copyright management server 702 includes a control unit 721.

Here, in one or more embodiments of the seventh example, the control unit 711 of the BD recorder 701 is configured to perform a control permitting reproduction of the ripping-processed content 41 for the predetermined period (for example, 24 hours) or the predetermined limit count (for example, ten times) when connection to the copyright management server 702 via the Internet 6 is not possible. Moreover, other configurations of the content management system 700 according to one or more embodiments of the seventh example are similar to those of the content management system 100 in one or more embodiments of the first example.

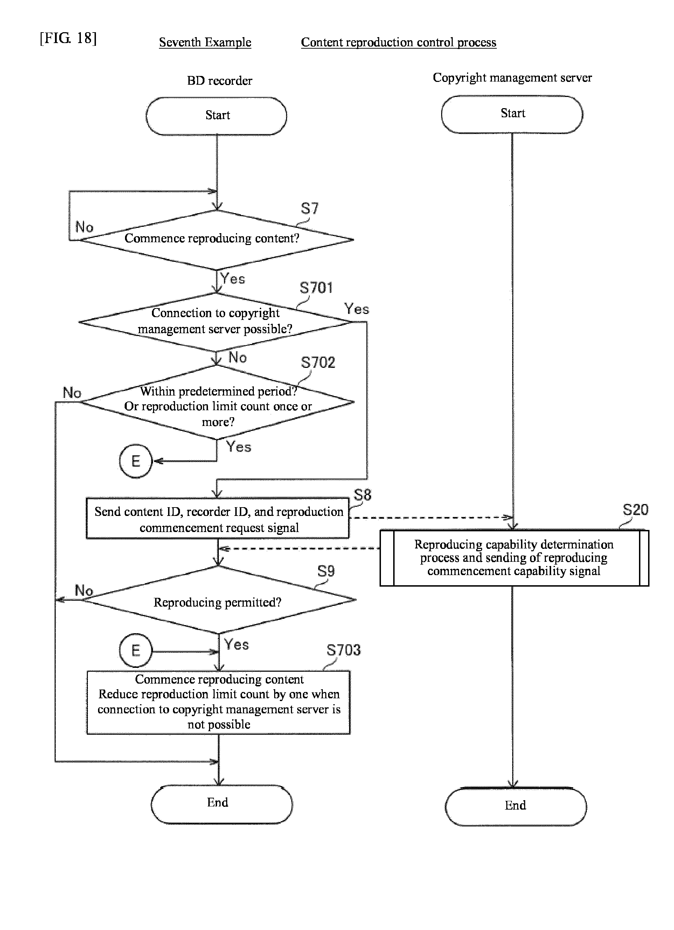

Next, the content reproduction control process flow of the content management system 700 according to one or more embodiments of the seventh example will be described with reference to FIG. 18. Processing in the BD recorder 701 is performed by the control unit 711. Processing in the copyright management server 702 is performed by the control unit 721.

First, as illustrated in FIG. 18, in the BD recorder 701, at step S7, a process similar to that of step S7 in the content reproduction control process (see FIG. 5) according to one or more embodiments of the first example is performed. Afterward, the process proceeds to step S701.

Then, at step S701, it is determined whether connection to the copyright management server 702 is possible. When connection is possible, the process proceeds to step S8, and when connection is not possible, the process proceeds to step S702.

Here, in one or more embodiments of the seventh example, at step S702, it is determined whether a time elapsed since connection to the copyright management server 702 immediately beforehand is within the predetermined period (for example, 24 hours) or whether a reproduction limit count (for example, ten times) is once or more. That is, when the time elapsed since connection immediately beforehand exceeds the predetermined period and the reproduction limit count is zero times, the content 41 is not reproduced, and the content reproduction control process by the BD recorder 701 ends. Moreover, when the time elapsed since connection immediately beforehand is within the predetermined period or the reproduction limit count is once or more, the process proceeds to step S703.

Then, at step S703, the content 41 is reproduced. That is, the content 41 is displayed on the display unit 33 of the television device 3 via the OSD unit 16. Then, when connection to the copyright management server 702 is not possible, when reproducing is performed, the reproduction limit count is reduced by one and stored in the hard-disk drive 15. Afterward, the content reproduction control process flow by the BD recorder 701 ends.

Furthermore, at step S8, to which the process proceeds when connection to the copyright management server 702 is possible at step S701, a process similar to that of step S8 in the content reproduction control process according to one or more embodiments of the first example is performed. Afterward, the process proceeds to step S9. Then, at step S9, it is determined whether reproduction of the content is permitted. When reproduction of the content is permitted, the process proceeds to step S703, and when reproduction of the content is permitted, the content reproduction control process flow by the BD recorder 701 ends.

Meanwhile, in the copyright management server 702, at step S20, a process similar to that of step S20 in the content reproduction control process according to one or more embodiments of the first example is performed. Afterward, the content reproduction control process flow by the copyright management server 702 ends.

In one or more embodiments of the seventh example, effects such as below can be obtained.

In one or more embodiments of the seventh example, as above, the control unit 711 of the BD recorder 701 is configured to perform the control permitting reproduction of the ripping-processed content 41 for the predetermined period (for example, 24 hours) or the predetermined limit count (for example, ten times) when connection to the copyright management server 702 via the Internet 6 is not possible. By this, the content 41 can be reproduced even when the BD recorder 701 cannot connect to the Internet 6 or when the copyright management server 702 is not operating. Moreover, other effects of the content management system 700 according to one or more embodiments of the seventh example are similar to those of the content management system 100 in one or more embodiments of the first example.

Embodiments herein disclosed are examples in every respect and should not be considered limiting. The scope of the present invention is indicated not by the above description of the embodiments but by the scope of patent claims and further includes meanings equivalent to the scope of patent claims and all modifications within the scope.

In one or more embodiments of the first to seventh examples, an example is illustrated of using the Blu-ray Disc (BD) recorder as the reproduction device, but the present invention is not limited thereto. A reproduction device other than the BD recorder as the reproduction device may be used. For example, as the reproduction device, a DVD (Digital Versatile Disk) recorder may be used.

Furthermore, in one or more embodiments of the first to seventh examples, an example is illustrated of using the Blu-ray Disc as the storage medium, but the present invention is not limited thereto. A storage medium other than the Blu-ray Disc as the storage medium may be used. For example, a DVD may be used as the storage medium.

Furthermore, in one or more embodiments of the first to seventh examples, an example is illustrated of using the memory as the external storage unit, but the present invention is not limited thereto. An external storage unit other than the memory as the external storage unit may be used. For example, a hard-disk drive configured to be connectable to an outer portion of the reproduction device may be used as the external storage unit.

Furthermore, in one or more embodiments of the first to seventh examples, as an example of the control method of the content management system while reproducing the content, an example is illustrated of using the control method of the content management system while reproducing the content ripping processed to the hard-disk drive of the BD recorder, but the present invention is not limited thereto. The control method of the content management system in one or more embodiments of the first to seventh examples may be used also while reproducing a content ripping processed to a location other than the hard-disk drive of the BD recorder. For example, the control method of the content management system in one or more embodiments of the first to seventh examples may be used while reproducing a content ripping processed to an external memory.

Furthermore, in one or more embodiments of the first to seventh examples, an example is illustrated where the initial count of the ripping limit count is made to be ten times, but the present invention is not limited thereto. The initial count of the ripping limit count may be set other than ten times. For example, the initial count of the ripping limit count may be made to be a count greater than ten times or less than ten times.

Furthermore, in one or more embodiments of the first to seventh examples, an example is illustrated where five devices is the predetermined plural allowed number, but the present invention is not limited thereto. The predetermined plural allowed number may be set other than five devices. For example, the predetermined plural allowed number may be made to be a number greater than five devices or a number less than five devices.

Furthermore, in one or more embodiments of the third example, examples are illustrated of a configuration where the BD recorder stores the ripping process count, but the present invention is not limited thereto. The copyright management server may store the ripping process count.

Furthermore, in one or more embodiments of the first to seventh examples, for convenience in description, the processes of the control unit are described using flowcharts of a flow-driven type that sequentially perform processes along process flows, but the present invention is not limited thereto. In one or more embodiments of the present invention, the process operations of the control unit may be performed by processes of an event-driven type that execute processes at events. In this situation, the process operations may be performed in a completely event-driven manner or by combining event drives and flow drives.

Furthermore, certain "units" of the projector device described above may be implemented by a circuit or processor using known methods.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Reference Signs List]

1, 1a, 201, 301, 301a, 401, 501, 601, 701 BD recorder (reproduction device)
2, 202, 302, 402, 502, 602, 702 Copyright management server (management server)
4 Blu-ray Disc (storage medium)
5 Memory (external storage unit)
11, 211, 311, 411, 511, 611, 711 Control unit (device-side control unit)
12 Communication unit (device-side communication portion)
15,315 Hard-drive disk (device-side storage unit or storage portion)
16 OSD unit (output unit)
21, 221, 321, 421, 521, 621, 721 Control unit (server-side control unit)
22 Storage unit (server-side storage unit or storage portion)
23 Communication unit (server-side communication portion)
41 Content
42 Disk ID (medium identification information)
43, 43a Recorder ID (device identification information)
44 List of contents
45 Content ID
100, 200, 300, 400, 500, 600, 700 Content management system

## Claims

1. A reproduction device (1), comprising:
a controller (11) configured to:
read from a recording medium (4) a content (41) and medium identification information (42) identifying the recording medium (4), and
create data that associates the medium identification information (42) with device identification information (43) identifying the reproduction device (1); and
a communication portion (12) configured to send the data to an external apparatus (2).

2. The reproduction device (1) according to claim 1, wherein
the communication portion (12) is configured to send the data to the external apparatus (2) each time the controller (11) reads the content from the recording medium (4) or each time the controller (11) reproduces the content (41).

3. The reproduction device (1) according to claim 1 or claim 2, wherein
the content (41) is stored in a storage portion (5), and
the controller (11) is configured to delete the content (41) stored in the storage portion (5) when the controller (11) receives from the external apparatus (2) a reproduction prohibition notification signal indicating prohibition of reproducing the content (41).

4. The reproduction device (1) according to claim 3, further comprising:
an on-screen display (OSD) portion (16) configured to output a list of contents stored in the storage portion (5), wherein
when the communication portion (12) receives from the external apparatus (2) a reproduction prohibition notification signal indicating prohibition of reproducing one of the contents, the controller (11) excludes the one of the contents from the list.

5. The reproduction device (1) according to any of claims 1-4, wherein the communication portion (12) is configured:
not to send the data to the external apparatus (2) when the controller reads the contents (41), and
to send the data to the external apparatus (2) when the controller (11) reproduces the content (41) for a first time.

6. The reproduction device (1) according to any of claims 1-5, wherein
the communication portion (12) is configured to send to the external apparatus (2) a cancel request signal for cancelling the association between the medium identification information (42) and the device identification information (43).

7. A management server (2), comprising:
a controller (21) configured to:
create data that associates:
medium identification information (42) that identifies a recording medium (4),
device identification information (43) that identifies an external apparatus (1), and
a reading limit count of a content read from the recording medium (4), and change the reading limit count based on the medium identification information (42)
and specific device identification information (43) received from the external apparatus (1); and
a communication portion (23) configured to send the data to the external apparatus (1).

8. The management server (2) according to claim 7, wherein
the controller (21) is configured to reset the reading limit count when the medium identification information (42) and the specific device identification information (43) received from the external apparatus (1) are not associated in the data.

9. The management server (2) according to claim 7, wherein
the controller (23) is configured to reset the reading limit count when a total number of the device identification information (43) associated with the medium identification information (42) in the data is greater than or equal to a predetermined value.

10. The management server (2) according to claim 7, wherein
when the medium identification information (42) and the specific device identification information (43) received from the external apparatus (1a, 1a) are not associated in the data, the controller (23) is configured to:
cancel the association between the medium identification information (42) and the device identification information (43) in the data,
associate the medium identification information (42) and the specific device identification information (43) received from the external apparatus (1) in the data, and
reset the reading limit count associated with the medium identification information (42).

11. The management server (2) according to claim 7, wherein
when a total number of the device identification information (43) associated with the medium identification information (42) in the data is greater than or equal to a predetermined value, the controller (23) is configured to:
cancel the association between the medium identification information (42) and the device identification information (43) in the data,
associate the medium identification information (42) and the specific device identification (43) received from the external apparatus (1) in the data, and
reset the reading limit count associated with the medium identification information (42).

12. The management server (2) according to any of claim 7-11, wherein
when the medium identification information (42) and the specific device identification information (43) received from the external apparatus (1) are not associated in the data, the communication portion (23) is configured to send a reproduction prohibition notification signal indicating prohibition of reproducing of the content to the external apparatus (1).

13. The management server (2) according to claim 7, wherein
the controller (21) is configured to cancel the association between the medium identification information (42) and the device identification information (43) in the data according to a request from the external apparatus (1).

14. The management server (2) according to claim 7, wherein
the controller (21) is configured to associate pieces of device identification information (43) with a single piece of medium identification information (42), and
the controller (21) is configured to reset the reading limit count when a total number of the pieces of device identification information (43) associated with the single piece of medium identification information (42) is greater than or equal to a predetermined value.

15. A management method for managing a content, comprising:
reading from a recording medium (4) the content (41) and medium identification information (42) identifying the recording medium (4);
creating first data that associates the medium identification information (42) with device identification information (15) identifying a first device (1);
sending the first data from the first device (1) to a second device (2);
creating second data that associates the medium identification information (42), the device identification information (43), and a reading limit count of the content (41) from the recording medium (4); and
changing the reading limit count of based on the first data sent by the first device (1).
